# EUROPEAN PATENT APPLICATION

(11) **EP 4 421 338 A2**
(43) Date of publication of application: **28.08.2024**
(21) Application number: 24187883.4
(22) Date of filing: 17.04.2020
(51) Int. Cl.: F16D 1/076

(54) **HEATED THROTTLE VALVE APPARATUS AND METHODS OF USE AND MANUFACTURE**

(30) Priority: 22.04.2019 US 201962837163 P
(62) Divisional of application: 20795749.9
(71) Applicant: MKS Instruments, Inc., Andover, MA 01810 (US)
(72) Inventor: CURRY, Robert, M., Arlington 02476 (US); COWE, Andrew, Andover 01810 (US)
(74) Representative: HGF

(57) **Abstract**

A heated throttle valve apparatus is disclosed herein, which includes a valve system with a valve driver configured to provide a rotational force to a valve assembly via a thermal isolating drive coupler configured to prevent the transfer of thermal energy from the valve assembly to the valve driver. The valve assembly includes a valve body and a valve closure member, a valve shaft with a valve shaft heater in a first heating zone and one or more body heaters in a second heating zone, permitting the user to control temperature in the heating zones independently. An electrical conductor strain relief is provided, configured to eliminate strain in the shaft heater electrical conductors when the valve closure member undergoes a change in angular orientation. The electrical conductor strain relief includes a flexible member with a curvilinear shape wound between a first connection area and a second connection area.

## Description

### Cross-reference to Related Applications

The present application claims priority to U.S. Provisional Patent Application Ser. No. 62/837,163 - entitled "Heated Throttle Valve Apparatus and Methods of Use and Manufacture" filed on April 22, 2019, the contents of which are incorporated by reference in its entirety herein.

### Background

Throttle valves are used in a variety of applications, including the control of pressure and flow in a wide variety of applications, including semiconductor manufacturing, pharmaceutical manufacturing, biotechnology, and solar and glass panel industrial manufacturing processes. One such semiconductor application is chemical vapor deposition (CVD). During CVD processes, a known problem is the condensation and or accretion of gases and particulates onto critical surfaces of valve components, thereby impairing valve operation and resulting in downtime for expensive automated production lines.

While prior art throttle valves have proven useful in the past, some shortcomings have been identified. For example, heat transfer from valve heaters and heated valve components to the valve control electronics, driver electronics and motor electronics may shorten the useful lives of those electronics. Also, high temperatures of various valve components combined with the motion of the valve components and heaters relative to the valve body may result in failure of electrical conductors including heater power wires and heater sensor wires connected to the valve heaters.

As such, there is an ongoing need for an improved valve design for thermal isolation of valve electronics from the heated zones of the valve, as well as an improved strain relief for electrical conductors used to power and control the valve heaters.

### Summary

The present application discloses various embodiments of a heated throttle valve apparatus and methods of use and manufacture. In one embodiment, the present application discloses a thermal isolating drive coupler configured to prevent the transfer of thermal energy from a heated valve closure member. In one embodiment, the thermal isolating drive coupler includes at least one first driving member with at least one first driving member body. The first driving member body may include at least one first plate body formed thereon. Further, one or more first engaging members may extend from the first plate body and may be configured to engage one or more first engaging member passages formed in at least one insert body of at least one insert positioned between the first driving member and at least one second driving member. The second driving member may include at least one second driving member body with one or more second engaging members extending therefrom. The second engaging member may be configured to engage one or more engaging member passages formed in the insert body, the insert body having a thermal conductivity less than about 2.00 W/(m°K). In another embodiment, the insert body has a thermal conductivity less than about 1.00 W/(m°K). In another embodiment, the insert body has a thermal conductivity less than about 0.50 W/(m°K). In another embodiment, the insert body has a thermal conductivity less than about 0.25 W/(m°K). The thermal isolating drive coupler may further include at least one first thermal isolating relief located between the first plate body surface of the first driving member body and the first insert body surface, the first thermal isolating relief configured to reduce the transfer of thermal energy between the first driving member body and the insert body. The thermal isolating drive coupler may further include at least one second thermal isolating relief located between the second insert surface of the insert body and the second plate body surface of the second driving member body, the second thermal isolating relief configured to reduce the transfer of thermal energy between the insert body and the second driving member body.

In another embodiment, the present application discloses an electrical conductor strain relief including at least one flexible member with at least one curvilinear flexible member body with at least one first end and at least one second end. The flexible member body and at least one pair of electrical conductors are positioned within at least one passage formed in at least one conduit, the conduit configured to secure the pair of electrical conductors to the flexible member. In one embodiment, the conduit is a heat-shrinkable material configured to secure the electrical conductors to the flexible member. In an alternate embodiment, the flexible member body has an approximately involute shape. In another embodiment, the flexible member has an approximately spiral shape.

In another embodiment, the present application discloses a valve assembly with at least one valve body with at least one sidewall, at least one inlet port and at least one outlet port, all defining a valve passageway configured to allow flow between the inlet port and the outlet port, The valve assembly further includes at least one valve shaft with at least one valve closure member coupled thereto and configured to undergo a change in angular orientation relative to the valve body, thereby reducing size of the valve passageway. The valve assembly further includes at least one thermal isolating drive coupler, including a first driving member, a second driving member and an insert positioned between the first driving member and the second driving member, the insert configured to transmit a rotational force from the first driving member to the second driving member. The insert is made from a material with a thermal conductivity below about 2.00 W/(m°K). The valve assembly further includes at least one shaft with at least one shaft heater positioned within a shaft heater passage, the shaft heater having at least one shaft heating element in thermal communication with at least one valve closure member. The shaft heater may further include at least one shaft heater sensor. The shaft heater is configured to control the temperature of the valve shaft and the closure member. The valve assembly further includes at least one interface assembly in electrical communication with the shaft heater, the interface assembly including at least one electrical conductor strain relief configured to route at least one shaft heater power conductor and at least one shaft heater sensor conductor from the shaft heater to one or more electrical connectors positioned on the interface assembly. The valve assembly may include at least one valve body heater positioned within at least one body heater passage formed in the valve body and in thermal communication with the valve body. The valve shaft, the shaft heater, and the valve closure member are configured to undergo a change in angular orientation relative to the valve body and the interface assembly. The shaft heater and the valve body heater may be controlled independently or not independently, and may drive the operating temperature of the valve closure member and the valve body to above about 200°C.

In another embodiment, the electrical conductor strain relief includes at least one slip ring electrical connector assembly including at least one slip ring rotor with at least one slip ring entrance, at least one slip ring stator with at least one slip ring exit, the slip ring rotor configured to route one or more electrical signals from the shaft heater power conductors and the shaft heater sensor conductors from the shaft heater to the slip ring stator, the slip ring stator configured to route the electrical signals from the slip ring exit to at least one electrical connector positioned on the interface assembly.

In another embodiment, the electrical conductor strain relief includes at least one flexible circuit assembly including at least one flexible circuit body with at least one pair of heater power conductors and at least one pair of heater sensor conductors formed thereon or attached thereto, the heater power conductors and the heater sensor conductors configured to route one or more electrical signals from the shaft heater and the shaft heater sensor to at least one electrical connector positioned on the interface assembly.

In another embodiment, the present application discloses a method of controlling the gap between a closure member and a valve body. At least one valve body heater is provided, the valve body heater coupled to at least one valve body having at least one sidewall, the sidewall having at least one inner dimension, the body heater configured to change the temperature of the valve body, thereby resulting in a change in the inner dimension of the sidewall. At least one shaft heater is provided, the shaft heater in thermal communication with the closure member, the closure member having at least one periphery having at least one outer dimension, the shaft heater configured to change the temperature of the closure member, thereby resulting in a change in the outer dimension of the periphery of the closure member. The method further includes sensing the temperature of the closure member and the temperature of the valve body, and controlling the temperature of the closure member and the valve body, thereby resulting in a change of dimension of at least one gap between the inner dimension of the sidewall and the outer dimension of the closure member.

Other features and advantages of the heated throttle valve and method of manufacture as described herein will become more apparent from a consideration of the following detailed description.

### Brief Description of the Drawings

Various embodiments of an apparatus for heated throttle valve and methods of use and manufacture will be explained in more detail by way of the accompanying drawings, wherein:
FIG. 1 shows a schematic of an exemplary chemical vapor deposition system;
FIG. 2 shows a perspective view of an embodiment of a heated throttle valve system;
FIG. 3 shows a perspective cross-sectional view of the embodiment of a heated throttle valve system shown in FIG. 2;
FIGS. 4A and 4B show cross-sectional views of the embodiment of a heated throttle valve assembly shown in FIG. 3, in a closed position;
FIG. 5 shows a cross-sectional view of the embodiment of a heated throttle valve assembly shown in FIG. 3, in a partially open position;
FIG. 6 shows a cross-sectional view of the embodiment of a heated throttle valve assembly shown in FIG. 3, in a partially open position;
FIG. 7 shows a cross-sectional view of the embodiment of a heated throttle valve assembly shown in FIG. 3, in a fully open position;
FIG. 8 shows a perspective cross-sectional view of the embodiment of a heated throttle valve assembly shown in FIG. 3;
FIG. 9 shows a perspective view of an embodiment of a thermal isolating coupler for use with the heated throttle valve shown assembly in FIG. 3;
FIG. 10 shows an exploded view of the embodiment of a thermal isolating coupler for use with the heated throttle valve assembly shown in FIG. 9;
FIG. 11 shows a cross-sectional view of an embodiment of a thermal isolating coupler shown in FIG. 9, with valve components shown in FIG. 8;
FIG. 12A shows a cross-sectional view of the embodiment of a heated throttle valve assembly with an interface assembly and electrical conductor strain relief shown in FIG. 8;
FIG. 12B shows a cross-sectional view of the embodiment of an electrical conductor strain relief shown in FIG. 12A;
FIGS. 13 and 14 show views of an embodiment of an adaptor shown in FIG. 12A;
FIG. 15 shows a perspective view of an embodiment of an interface assembly for use with the heated throttle valve assembly shown in FIG. 8;
FIG. 16 shows a view of the embodiment of an interface assembly with an electrical conductor strain relief for use with the heated throttle valve assembly shown in FIGS. 8 and 15;
FIGS. 17A-C show views of the embodiment of an electrical conductor strain relief shown in FIG. 16;
FIG. 18 shows a perspective view of an embodiment of a slip ring electrical connector device for use with an embodiment of a heated throttle valve assembly;
FIG. 19 shows a cross-sectional view of the embodiment of a slip ring electrical connector device for use with the heated throttle valve assembly shown in FIG. 18;
FIGS. 20A-C show cross-sectional views of an embodiment of a heated throttle valve assembly;
FIG. 21 shows a perspective cross-sectional view of the embodiment of a heated throttle valve assembly shown in FIGS. 20A-C;
FIG. 22 shows a detail of the perspective view of the embodiment of a heated throttle valve assembly shown in FIG. 21;
FIG. 23 shows a view of an embodiment of an interface assembly with an electrical conductor strain relief for use with the heated throttle valve assembly shown in FIG. 21; and
FIG. 24 shows a perspective view of an alternate embodiment of an interface assembly with an electrical conductor strain relief for use with a heated throttle valve assembly.

### Detailed Description

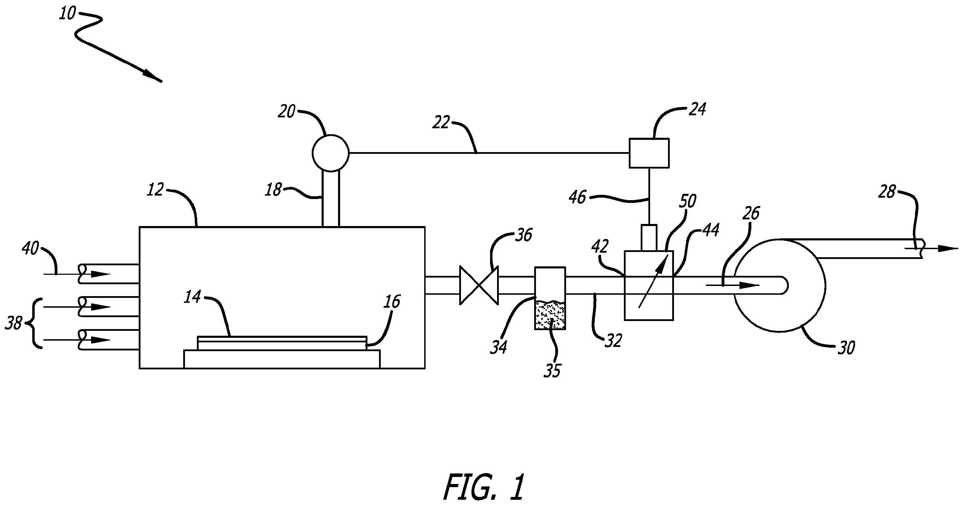

A schematic of an exemplary chemical vapor deposition (CVD) system 10 is shown in FIG. 1. The CVD system 10 may include a reaction chamber 12 in which feed gases 38 react in a manner resulting in the deposition of a thin film 14 onto a substrate 16 positioned in the reaction chamber 12. A vacuum pump 30, connected to the chamber 12 by a vacuum pumping conduit 32, is used to maintain a vacuum in the chamber 12 for as long as desired to keep the chamber 12 and the conduit 32 free of air, water and other contaminants, or to evacuate the chamber. A valve system 50, such as a throttle valve, opens and closes to the extent necessary to maintain the pressure in the chamber 12 in a desired positive or negative (vacuum) range suitable for the particular process, or to evacuate the chamber. A feedback system 22 between a pressure transducer 20 and a control system 24 connected to the chamber 12 may facilitate automatic control of the valve system 50. During chamber evacuation, inert purge gases 40 may be pumped into the chamber and a variety of effluents are pumped out of the chamber 12 by the vacuum pump 30 via the conduit 32. These effluents include fluorinated gases, dielectric etch gases, inorganic halides, hydrides, organometallics, metal alkoxides, and the like. The effluents in a vapor phase may cool below the vapor phase transition temperature and condense or accrete as byproducts 35, thereby clogging or otherwise interfering with the function of the valve system 50 or other components or systems downstream of the reaction chamber 12. A filter device 34 may be used to filter or trap some byproducts 35, but the remainder byproducts 35 do reach the valve system 50. The present disclosure describes various embodiments of a heated throttle valve system 50 and methods of use operative to reduce or eliminate the buildup of the byproducts 35 in the valve system 50.

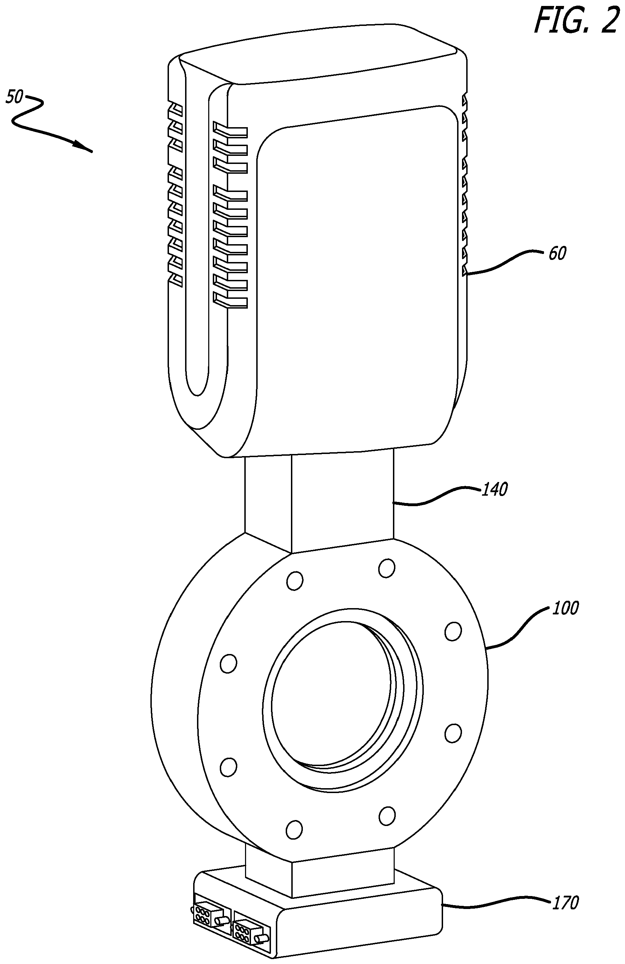

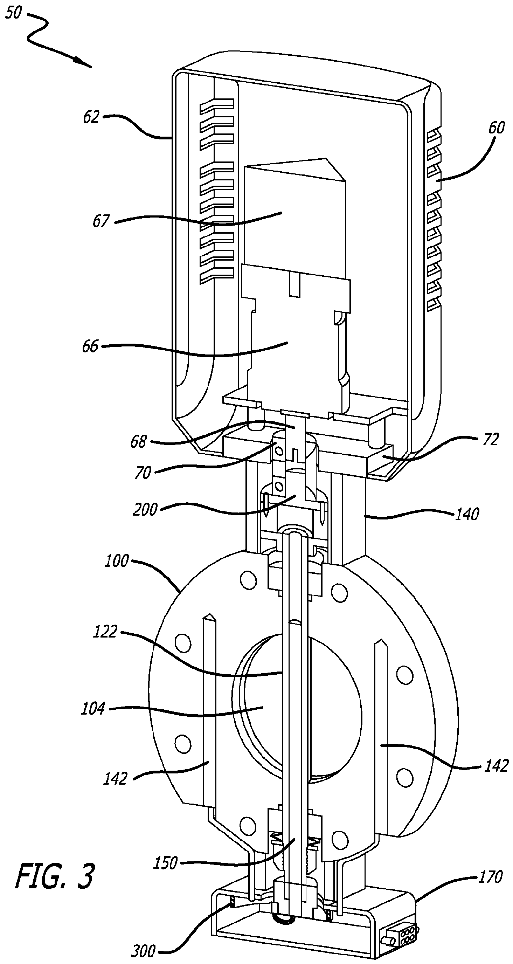

FIGS. 2 and 3 show perspective and cross-sectional views of the valve system 50, respectively. As shown, the valve system 50 includes at least one driver assembly 60, at least one valve assembly 100 and at least one interface assembly 170. The driver assembly 60 may be movably coupled to the valve assembly 100 and may be configured to provide at least one actuating force to control the position and/or angular orientation of at least one valve closure member 104 (also referred to as "closure member"), thereby controlling the pressure on either side of the valve and flow through the valve assembly 100. The interface assembly 170 may include the electrical conductors used to drive and control at least one shaft heater assembly 150 (also referred to as "shaft heater") configured to control the temperature of at least one valve shaft 122 and the valve closure member 104. Exemplary heater assemblies 150 include, without limitation, resistive Nichrome cartridge heaters, tubular heaters, and the like. In the illustrated embodiment, the valve closure member 104 is made from 316 stainless steel. Optionally, the valve closure member 104 may be made of any variety of materials, including, without limitation, 304 stainless steel, other stainless steel alloys, nickel-based super-alloys (such as Inconel, Kovar, Invar), or copper based alloys such as bronze. Those skilled in the art will appreciate that that the valve closure member 104 may be made from any variety of materials.

As shown in FIGS. 1 and 3, in the illustrated embodiment, the driver assembly 60 includes at least one driver 66 and at least one encoder 67 located within at least one cover 62 and in communication with the control system 24, thereby permitting the user to communicate with and control the valve assembly 100. Exemplary drivers 66 include without limitation, stepper motors, servo motors, brushless motors, piezo drivers, and the like. The driver 66 and encoder 67 may be in communication with the control system 24 (see FIG. 1) via at least one connector (not shown) and at least one conduit 46, thereby permitting the user to control the valve system 50. The encoder 67 is configured to sense the angular position of the valve closure member 104. Alternatively, the driver 66 and encoder 67 may be in communication with the control system 24 wirelessly. Optionally, the driver assembly need not have an encoder 67. In another embodiment, the control system 24 may be located within the driver assembly 60.

Referring again to FIG. 3, during use, the driver 66 may provide a rotational actuating force that is transmitted from at least one shaft 68 to at least one coupler 70. In the illustrated embodiment, the coupler 70 has a single slit formed therein, and one or more fasteners (not shown) are used to clamp the coupler 70 to the shaft 68. Those skilled in the art will appreciate that the coupler 70 may be engaged with the shaft in any variety of ways. The coupler 70 transmits the rotational actuating force from the shaft 68 to the valve assembly 100 via at least one thermal isolating drive coupler 200, thereby resulting in a change of angular orientation of the valve closure member 104 relative to the driver assembly 60 and the valve body 110 (described below). In the illustrated embodiment, the coupler 70 is rotationally coupled to the thermal isolating drive coupler 200 by one or more coupling devices (not shown), thereby transmitting rotation from the coupler 70 to the thermal isolating drive coupler 200. Embodiments of coupling devices used to secure the coupler 70 to the thermal isolating drive coupler 200 are described below. Optionally, the shaft 68 may be coupled to the thermal isolating drive coupler 200 directly, without the use of the coupler 70.

At least one valve body adaptor 140 configured to mechanically couple the driver assembly 60 to the valve assembly 100 may extend from at least one mounting plate 72 of the driver assembly 60 to at least one valve body 110. In the illustrated embodiment, the valve body 110 is made from 316 stainless steel. Optionally, the valve body 110 may be made of any variety of materials, including, without limitation, 304 stainless steel, other stainless steel alloys, nickel-based super-alloys (such as Inconel, Kovar, Invar), or copper-based alloys such as bronze. Those skilled in the art will appreciate that that the valve body 110 may be made from any variety of materials.

In one embodiment, the valve body adaptor 140 may be configured to minimize or prevent the transfer of thermal energy from the valve body 110 to the driver assembly 60. In one embodiment, the valve body adaptor 140 is made from a single piece of material. Optionally the valve body adaptor may be made from layers of different materials. The valve body adaptor 140 may be made from a variety of materials with low thermal conductivity (thermally insulating), including, without limitation, thermoplastic polymers such as PEEK polyether ether ketone, Ultem^{®} polyetherimide (PEI) or Torlon^{®} polyamide-imide (PAI), Delrin^{®} acetal resin, thermoset polymers such as phenolic resins, Teflon^{®} PTFE fluoropolymers, phenolic resins, composite materials, or ceramic materials. Those skilled in the art will appreciate that the valve body adaptor 140 may be made from any variety of thermal insulating materials. Optionally, the valve body adapter 140 need not be made a thermally insulating material.

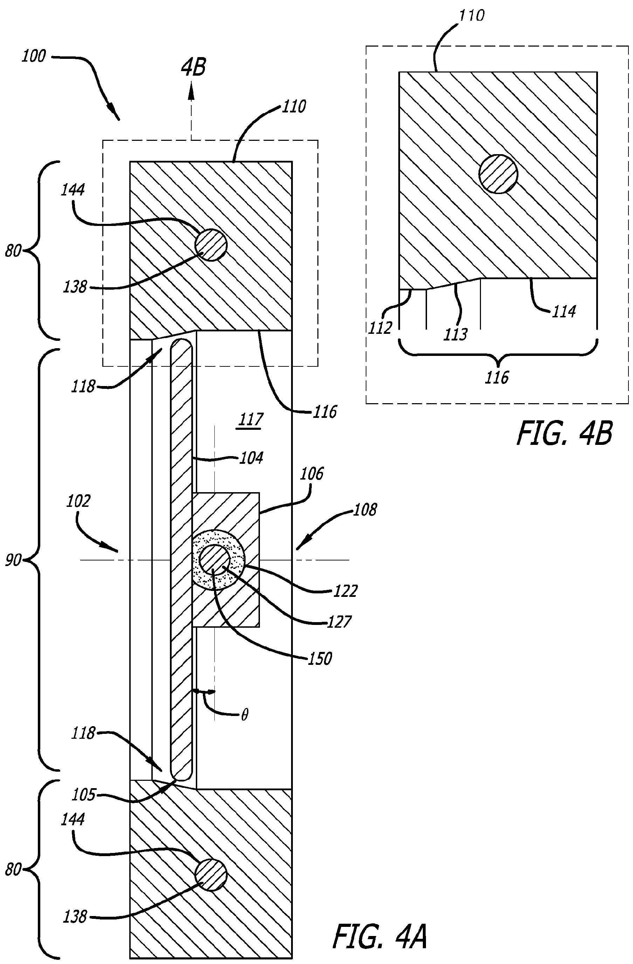

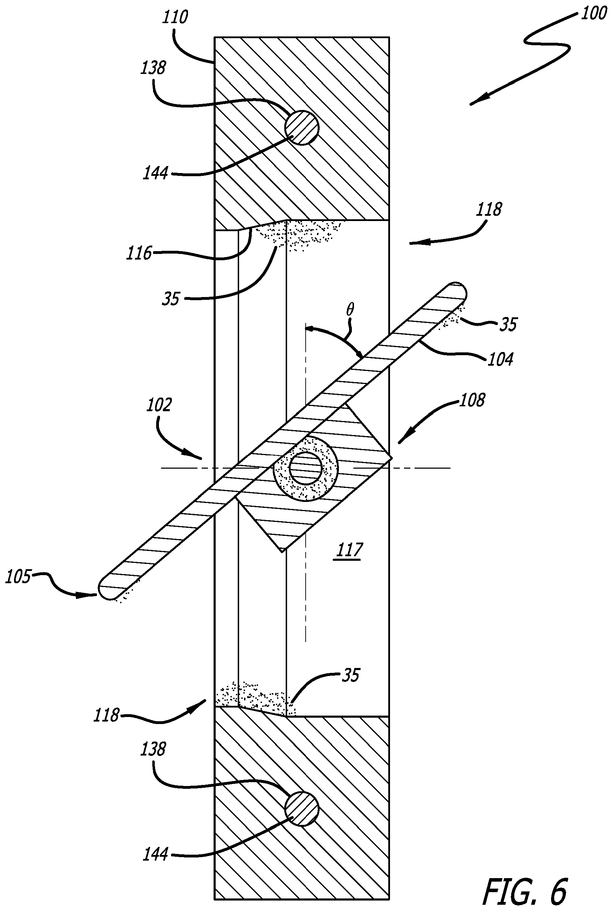

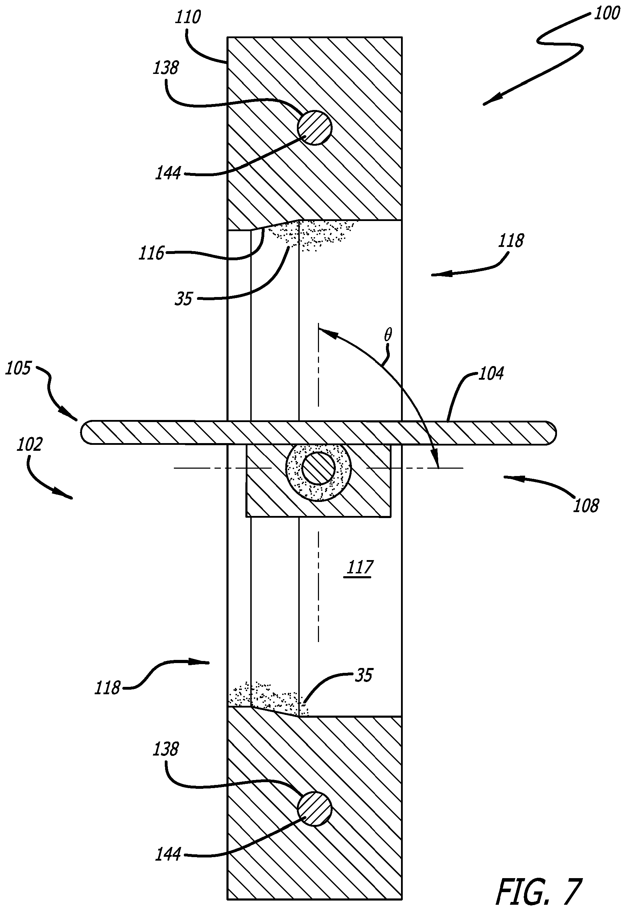

FIGS. 4A-7 show various cross-sectional views of the valve assembly 100. As shown in FIGS 4A and 4B, the valve body 110 may include at least one sidewall 116 defined by at least one first bore 112, at least one second bore 114 and at least one tapered region 113 between the first bore 112 and the second bore 114. Alternatively, the sidewall 116 may only have a single bore. The sidewall 116 and the valve closure member 104 define the area of a valve passageway 117. For example, as shown in FIG. 4A, the valve passageway 117 may be defined as the circular area of the valve body 110 at the tapered region 113 minus the area blocked by the closure member 104. The valve passageway 117 defines at least one inlet port 102 upstream of the closure member 104 and at least one outlet port 108 downstream of the closure member 104. The valve closure member 104 is configured to reduce the size of the valve passageway 117, thereby restricting flow from the inlet port 102 to the outlet port 108. In one embodiment, the valve assembly 100 is configured to maintain a difference in positive pressure between the inlet port 102 and the outlet port 108. In another embodiment, the valve assembly 100 is configured to maintain a difference in negative pressure between the inlet port 102 and the outlet port 108. In the illustrated embodiment, the valve closure member 104 has a generally circular shape, with at least one periphery 105, although those skilled in the art will appreciate that the valve closure member 104 may be any variety of shapes.

Referring again to FIGS. 4A-7, in the illustrated embodiment, at least one shaft 122 configured to adjust the angular orientation of the valve closure member 104 traverses through the valve passageway 117. In the illustrated embodiment, the valve closure member 104 is mechanically coupled to the shaft 122 by at least one clamp body 106. Optionally, the valve closure member 104 may be formed integral to the shaft 122. As described above, during use, the driver assembly 60 provides an actuating force to change the angular orientation of the valve closure member 104 at an angle θ relative to the valve body, thereby controllably adjusting the area of the valve passageway 117.

FIG. 4A shows the valve assembly 100 with the valve closure member 104 oriented at an angle θ = 0° relative to the centerline of the valve body 110 (also referred to as the "closed position"). The area of the valve passageway 117 is at a minimum when the valve closure member 104 is in the closed position. As shown in FIG. 4A, in the closed position, a gap 118 may exist between the periphery 105 of the valve closure member 104 and the sidewall 116. Optionally, there need not be a gap 118 between the periphery 105 of the valve closure member 104 and the sidewall 116. As the valve opens, the angle θ, the gap 118 and the area of the valve passageway 117 all increase.

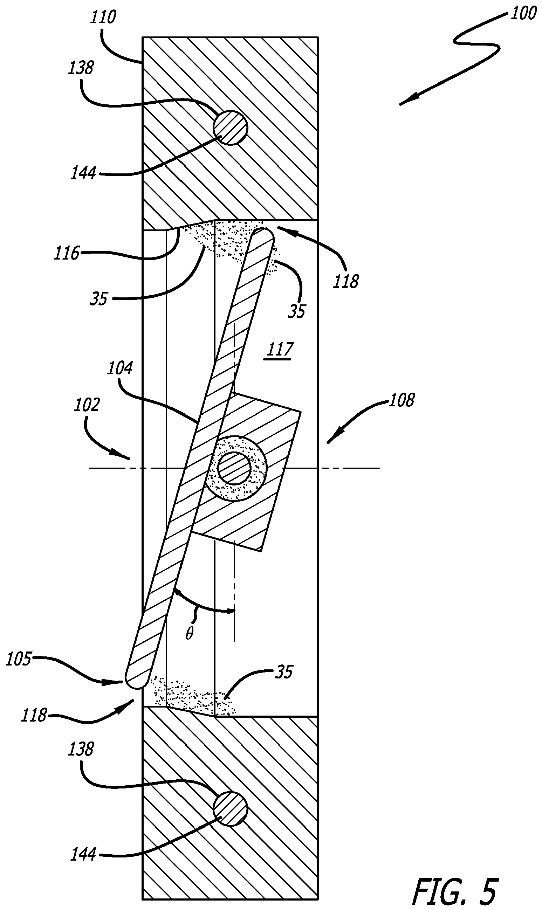

FIGS. 5-7 show the valve assembly 100 with the valve closure member 104 oriented at various angles θ of approximately 15°, 45°, and 90°, respectively, relative to the centerline of the valve body 110. With the valve closure member 104 in these orientations, as the gap 118 becomes larger and as effluents flow through the larger valve passageway 117, the temperature of the effluents may drop due to changes in pressure or other heat transfer, resulting in the effluents condensing or accreting as byproducts 35 onto the sidewall 116 or onto the periphery 105 or other locations on the valve closure member 104.

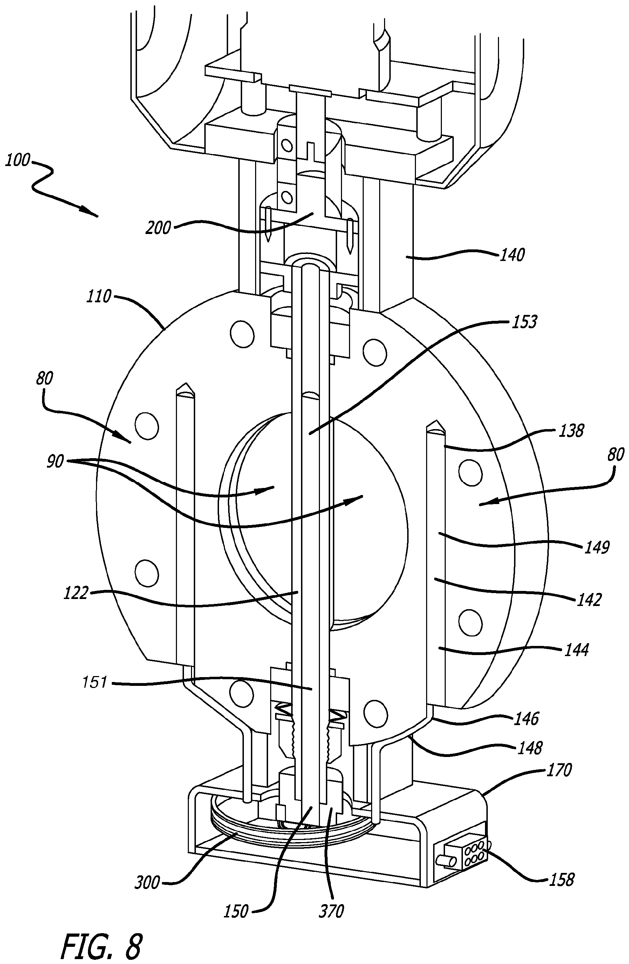

As shown in FIGS. 4A and 8, the valve assembly 100 may have at least one first heating zone 80 and at least one second heating zone 90, configured to permit the user to independently control the temperature of the valve components in the respective heating zones. For example, in the illustrated embodiment, the first heating zone 80 includes the valve body 110 and the second heating zone 90 includes the shaft 122 and valve closure member 104. Those skilled in the art will appreciate that thermal energy may be transferred between the first heating zone 80 and the second heating zone 90, for example where the shaft 122 traverses through the valve body 110 and the valve components as shown in FIGS. 3, 8, 11 and 12A. Those skilled in the art will appreciate that there may be any number of heating zones in the valve assembly 100. The shaft heater 150 that is configured to allow the user to control the temperature of the valve closure member 104 may be positioned within at least one shaft heater passage 127 formed in the shaft 122. In the illustrated embodiment, the shaft heater 150 comprises at least one shaft heating element 151 in electrical communication with the control system 24 via one or more heater power conductors 154, the heater power conductors 154 configured to provide electrical power to the shaft heating element 151. During use, the shaft heater 150 may be used to maintain the valve closure member 104 at a temperature between about 100°C and about 250°C in order to prevent the buildup of the byproducts 35 on the valve closure member 104, the sidewall 116, and/or in the gap 118. Those skilled in the art will appreciate that the shaft heater 150 may be used to maintain the valve closure member 104 at any variety or range of temperatures. The shaft heater 150 may include at least one sensor 153 in communication with the control system 24 via one or more heater sensor conductors 152. The sensor 153 may be configured to sense the temperature of the shaft heater 150 and to enable the user to monitor and control the temperature of the valve closure member 104 and the second heating zone 90 via the control system 24. In the illustrated embodiment, the sensor 153 is a thermocouple, although those skilled in the art will appreciate that the sensor 153 may be a thermistor, pyroelectric sensor, infrared sensor, thermopile, current limiter, or any variety of temperature sensors. In another embodiment, the heating element 151 may be provided as a self-regulating, positive temperature coefficient (PTC) heating element. In the illustrated embodiment, the shaft heating element 151 is configured to rotate with the shaft 122. In one embodiment, the clearance between the outer dimension of the shaft heating element 151 and the interior surface of the shaft heater passage 127 may be low (e.g. 0.001"), thereby maximizing the thermal communication between the shaft heating element 151 and the shaft heater passage 127 and allowing for efficient heating of the shaft 122 and the valve closure member 104. In another embodiment, a thermal conducting material (not shown) such as a thermal conducting paste or lubricant may be disposed between the outer dimension of the shaft heating element 151 and the interior surface of the shaft heater passage 127. In another embodiment, the shaft heating element 151 may be bonded to the interior surface of the shaft heater passage 127 using a thermal-conducting adhesive such as epoxy. Those skilled in the art will appreciate that thermal energy may be conducted from the shaft heating element 151 to the shaft 122 via any variety of methods or materials. Alternatively, the shaft heating element 151 may not rotate with the shaft 122.

Referring again to FIGS. 4A-8, the valve assembly 100 may include one or more body heater assemblies 142 (also referred to as "body heaters") configured to control the temperature of the valve body 110 in the first heating zone 80. The body heaters 142 may each include a body heater element 144 and a body heater sensor 149 located within one or more body heater passages 138 formed in the valve body 110. The body heaters 142 may also include one or more body heater power conductors 146 and one or more body heater sensor conductors 148 (also referred to collectively as the" body heater conductors") configured to provide electrical power to the body heating elements 144 and the body heater sensors 149 from the control system 24, thereby permitting the user to control the temperature of the valve body 110 and other components in the first heating zone 80. Exemplary body heater sensors 149 have been described above with respect to the sensor 153 of the shaft heater 150. In the illustrated embodiment, two body heaters 142 are installed, each on opposing sides of the valve passageway 117 as shown in FIGS. 4A-8. During use, the body heaters 142 may be used to maintain the valve body 110 and the first heating zone 80 at a temperature between about 100°C and about 250°C in order to prevent the buildup of the byproducts 35 on the valve closure member 104, the sidewall 116 or in the gap 118. In the illustrated embodiment, the shaft heater 150 and the body heaters 142 are in electrical communication with the control system 24 via at least one connector 158 located in the interface assembly 170. The control system 24 may be configured to control the body heaters 142 and the shaft heater 150 to maintain their respective heating zones 80 and 90 at the same temperature, or at different temperatures. Optionally, the shaft heater 150 and the body heaters 142 may be in electrical communication with the control system 24 via one or more conductors (not shown) routed between the heaters 142, 150 and the driver assembly 60. Those skilled in the art will appreciate that shaft heater 150 and the body heaters 142 may be in electrical communication with the control system 24 in any manner desired or beneficial.

Referring again to FIGS. 4A-8, the body heaters 142 and the shaft heater 150 may be used to control the size of the gap 118 by controlling the respective temperatures of the valve body 110 and the valve closure member 104. For example, an increase in the temperature of the valve closure member 104 may result in an increase in the diameter/dimension of the periphery 105 of the valve closure member 104 due to the coefficients of thermal expansion of the valve closure member 104, clamp body 106, and shaft 122. For example, in one embodiment, the material of the closure member 104 may have a coefficient of thermal expansion larger than that of the valve body 110. In another embodiment, the material of the closure member 104 may have a coefficient of thermal expansion smaller than that of the valve body 110. In another embodiment, the materials of the closure member 104 and the valve body 110 may have equal coefficients of thermal expansion. A decrease in the temperature of the valve body 110 may result a change in the size of the valve passageway 117. As such, control of the shaft heater 150 and the body heaters 142 may be used to increase or decrease the gap 118 and thereby the area of the valve passageway 117 as needed. In the illustrated embodiment, the gap 118 may be around 0.005" at room temperature, although those skilled in the art will appreciate that the gap may be any size at room temperature. The user may, by controlling the relative temperatures of the valve closure member 104 and the valve body 110, cause the periphery 105 of the valve closure member 104 to contact the sidewall 116, reducing the gap 118 to zero, thereby completely closing or sealing the flow passageway 117. This may result in damage to the valve components due to temperature-induced stress or by wear and/or galling of the closure member 104 or valve body 110.

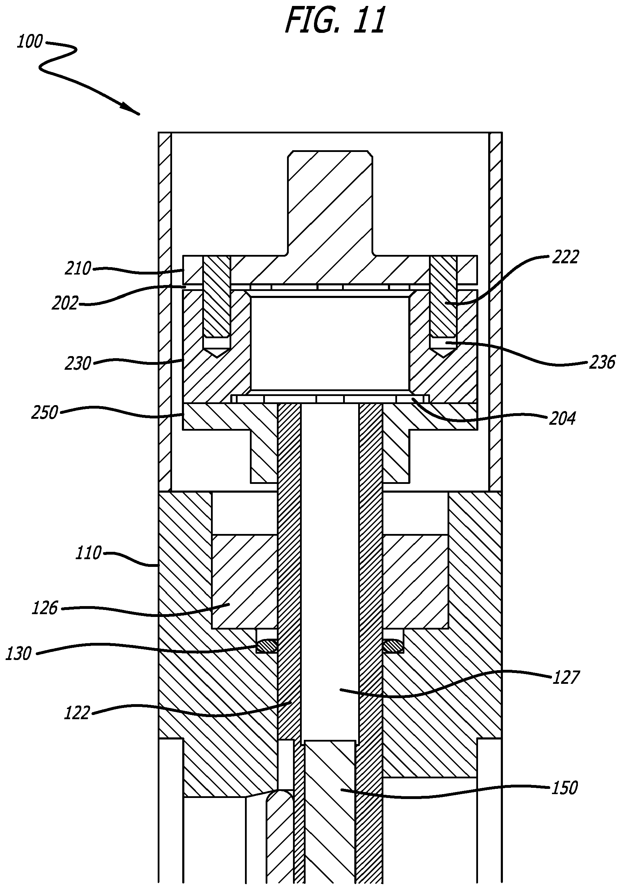

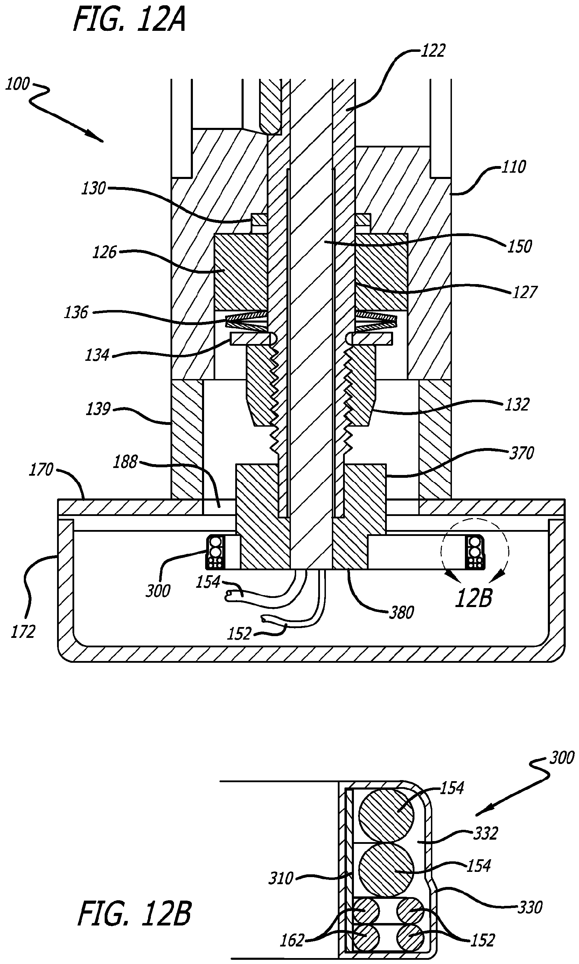

FIGS. 11 and 12A show cross-sectional views of the valve assembly at the areas above and below the closure member 104, respectively. One or more bearings 126 may be positioned between the shaft 122 and the valve body 110. One or more seals 130 configured to prevent loss of pressure or vacuum from the valve passageway 117 may be positioned between the valve body 110 and the shaft 122. At least one adjusting member 132 configured to exert a biasing force on the shaft 122 may be coupled to the shaft 122. One or more biasing devices 136 and one or more washers 134 configured to provide a biasing force to the shaft 122 may be positioned between the adjusting member 132 and the bearing 126. In the illustrated embodiment, the adjusting member 132 is a threaded nut in threaded relation with corresponding threads on the shaft 122, although those skilled in the art will appreciate that adjusting member 132 may be coupled to the shaft 122 by any variety of mechanisms. In one embodiment, the biasing force applied by the adjusting member 132 is configured to center the closure member 104 within the valve passageway 117 or to preload the bearings 126.

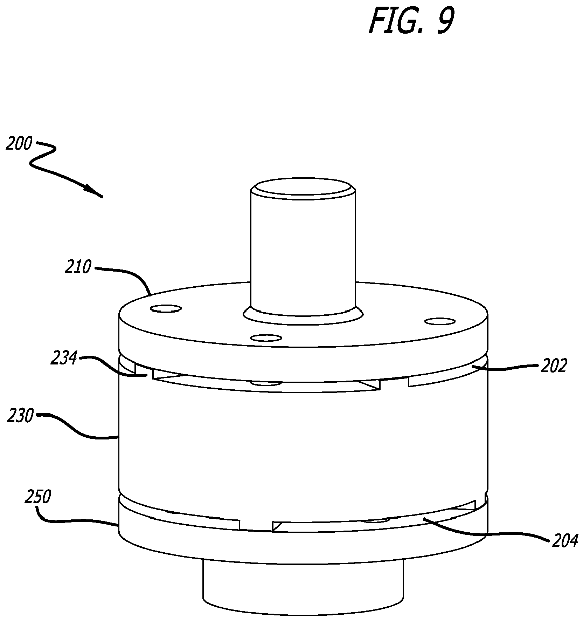

FIGS. 9-11 show a perspective view, an exploded view and a cross-sectional view, respectively, of an embodiment of a thermal isolating drive coupler 200. As shown, the thermal isolating drive coupler 200 comprises at least one first hub or driving member 210, at least one coupling insert 230 and at least second hub or driving member 250. The first driving member 210 includes at least one driving member body 212 with at least one shaft or extended region 214 formed thereon, the extended region 214 having at least one outer dimension or diameter 216 configured to interface with the coupler 70 and transfer changes in angular orientation from the shaft 68 to the driving member body 212. In the illustrated embodiment, the coupler 70 is clamped around the extended region 214 as described above with respect to the connection between the shaft 68 and the coupler 70. In another embodiment, the extended region 214 is rotationally coupled to the coupler 70 by one or more coupling devices (not shown). In one embodiment, the coupling device may be provided as a key, positioned in opposing keyways formed in the coupler 70 and the extended region 214. In another embodiment, the coupler 70 is rotationally coupled to the extended region 214 by a pin extending through the coupler 70 and a portion of the extended region 214. In another embodiment, the coupler 70 is rotationally coupled to the thermal isolating drive coupler 200 by a press-fit between the coupler 70 and the extended region 214 or another portion of the thermal isolating drive coupler 200. Those skilled in the art will appreciate that the extended region 214 may be rotationally coupled to the coupler 70 in any variety of ways. The driving member body 212 further includes one or more flanges or plate bodies 220 formed thereon. In the illustrated embodiment, the driving member body 212 is made of stainless steel. Optionally, the driving member body 212 may be made from metals such as aluminum, steel, bronze, brass and the like. Those skilled in the art will appreciate that the driving member body 212 may be made of any variety of metals, alloys, or other materials. Alternatively, the driving member body 212 may be made from materials with low thermal conductivity such as those described below relative to the insert body 232.

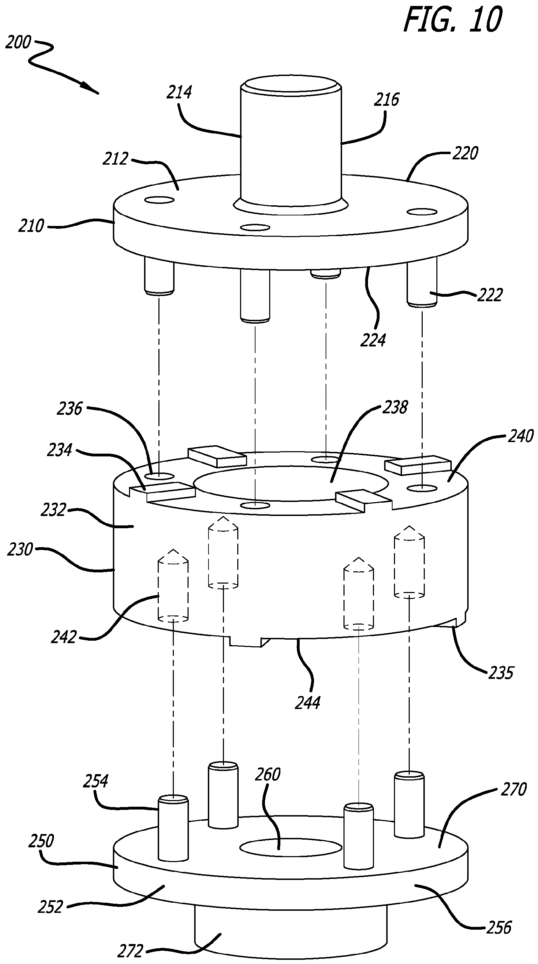

As shown in FIG. 10, one or more engaging members 222 may be formed on or attached to at least one surface 224 of the plate body 220, the engaging members 222 configured to engage with and cause a change in angular orientation of the coupling insert 230. In the illustrated embodiment, four engaging members 222 are formed on or attached the surface 224 of the plate body 220, although those skilled in the art will appreciate that any number of engaging members 222 may be used. In the illustrated embodiment, the engaging members 222 are pins or studs press-fit or threaded into the plate body 220. Those skilled in the art will appreciate that the engaging members 222 may be formed integral to the plate body 220. Optionally, the first driving member 210 may be mechanically coupled to the coupling insert 230 by keys, gear teeth, or splines. Those skilled in the art will appreciate that any variety of mechanical coupling configurations may be used to couple the first driving member 210 to the coupling insert 230.

Referring again to FIG. 10, the second driving member 250 comprises at least one driving member body 252. Exemplary and alternative materials for the driving member body 252 are listed above with respect to the driving member body 212 of the first driving member 210. In one embodiment, a flange or plate body 256 having at least one surface 270 formed on or attached to the driving member body 252. Optionally, the surface 270 may be formed on the driving member body 252 without a flange or plate body 256. One or more engaging members 254 may be formed on or attached to the surface 270 of the driving member body 252 or plate body 256 of the second driving member 250. In the illustrated embodiment, four engaging members 254 are formed on or attached to the surface 270, although those skilled in the art will appreciate that any number of engaging members 254 may be used. In the illustrated embodiment, the engaging members 254 are pins or studs press-fit or threaded into the plate body 256. In one embodiment, the engaging members 254 are made from a different material as the driving member body 252 or the plate body 256. Alternatively, the engaging members 254 may be made of the same material as the driving member body 252 or the plate body 256. Those skilled in the art will appreciate that the engaging members 254 may be formed integral to and of the same material as the driving member body 252 or the plate body 256. One or more bosses or extended regions 272 may be formed on the driving member body 252. Optionally, no extended region 272 may be formed on the driving member body 252. In the illustrated embodiment, at least one passage 260 sized to receive at least a portion of the shaft 122 of the valve assembly 100 may be formed in the driving member body 252 of the second driving member 250, the passage 260 extending through the driving member body 252 and the extended region 272. In another embodiment, the passage 260 may not extend all the way through the driving member body 252.

Referring to FIG. 11, in the illustrated embodiment, the second driving member 250 is rotationally coupled to the shaft 122 by one or more coupling devices (not shown), thereby transmitting rotation from the thermal isolating drive coupler 200 to the shaft 122. In one embodiment, the coupling device may be provided as a key, positioned in opposing keyways formed in the shaft 122 and the second driving member body 252. In another embodiment, the second driving member 250 is rotationally coupled to the shaft 122 with a spline. Those skilled in the art will appreciate that any variety of coupling devices or arrangements may be used to rotationally couple the second driving member 250 to the shaft 122.

In another embodiment, the second driving member 250 may be vertically as well as rotationally coupled to the shaft 122 by one or more coupling devices (not shown). For example, in one embodiment, the coupling device may be provided as a pin extending through the body 252 or the extended region 272 of the second driving member 250 and through the shaft 122. In another embodiment, the second driving member 250 may be coupled to the shaft 122 by an interference-fit or press-fit between the shaft 122 and the body 252 of the second driving member 250. In another embodiment, the second driving member 250 may be coupled to the shaft 122 by one or more adhesives such as Loctite^{®}. Those skilled in the art will appreciate that any variety of coupling devices or arrangements may be used to rotationally and vertically couple the second driving member 250 to the shaft 122.

As shown in FIGS. 9-11, in the illustrated embodiment, the coupling insert 230 includes at least one insert body 232. In the illustrated embodiment, the insert body 232 is made of a material with low thermal conductivity configured to reduce the rate of transfer of thermal energy between the second driving member 250 and the first driving member 210, thereby reducing the operating temperature of the driver 66 and its control electronics during operation of the valve system 50. Exemplary thermal insulating materials include thermoplastic polymers such as PEEK (polyether ether ketone), Ultem^{®} polyetherimide (PEI) or Torlon^{®} polyamide-imide (PAI), Delrin^{®}, acetal resin, nylon, or thermoset polymers such as phenolic resins, Teflon^{®} PTFE fluoropolymers, phenolic resins, composite materials, or ceramic materials. In one embodiment, the insert body 232 may be made of Delrin^{®}, with a thermal conductivity of less than about 0.40 W/(m°K). In another embodiment, the insert body 232 may be made of PEEK or Torlon^{®}, with thermal conductivities between about 0.30 W/(m°K) and about 0.20 W/(m°K). In another embodiment, the insert body 232 may be made of Ultem^{®}, with a thermal conductivity of less than about 0.15 W/(m°K). In another embodiment, the insert body 232 may be made of a material with a thermal conductivity of below about 0.10 W/(m°K). Those skilled in the art will appreciate that the insert body 232 may be formed from any variety of materials with any variety of thermally conductive properties.

One or more engaging member passages 236 sized to receive the engaging members 222 of the first driving member 210 may extend from at least one insert body first surface 240 into the insert body 232 of the coupling insert 230. At least one first raised area or contact area 234 may be formed on or extend from the first insert body surface 240 of the insert body 232. In the illustrated embodiment, four first contact areas 234 are formed on the first insert body surface 240. At least one second contact area 235 may be formed on at least one second insert body surface 244. In the illustrated embodiment, four second contact areas 235 are formed on the second insert body surface 244. Those skilled in the art will appreciate that any number of contact areas 234, 235 may be formed on the insert body surfaces 240 and 244, respectively, of the insert body 232. Optionally, the insert body 232 need not have contact areas 234 or 235 formed thereon. One or more engaging member passages 242 sized to receive the engaging members 254 (described below) of the second driving member 250 may extend from the second insert body surface 244 into the insert body 232. In the illustrated embodiment, a circular bore or cavity 238 is formed in the insert body 232, extending from the first insert body surface 240 through the second insert body surface 244, the cavity 238 configured to provide thermal insulation or isolation between the valve heater 150 and the driver assembly 60. Optionally, the cavity 238 need not be circular. In another embodiment, the cavity 238 may not extend all the way through either of the insert body surfaces 240, 244. In another embodiment, multiple cavities 238 may be formed in the insert body 232. Optionally, the insert body 232 need not have a cavity 238. Those skilled in the art will appreciate that the cavity 238 may be formed in any shape.

Referring again to FIGS. 9 and 11, when the first driving member 210 is engaged with the coupling insert 230, the contact areas 234, the first insert body surface 240 and the second insert body surface 244 of the first driving member 210 may define at least one thermal isolating relief 202 configured to reduce the transfer of thermal energy from the first driving member 210 to the coupling insert 230. In similar fashion, when the second driving member 250 is engaged with the coupling insert 230, the contact areas 235, the surface 270 of the plate body 256 of the second driving member 250 and the second insert body surface 244 may define at least one thermal isolating relief 204 configured to reduce the transfer of thermal energy from the second driving member 250 to the coupling insert 230. In the illustrated embodiment, the thermal isolating reliefs 202 and 204 are air gaps. In another embodiment, a vacuum may be formed within the reliefs 202 and 204. Optionally, a thermal insulating material (not shown) may be inserted into the thermal isolating reliefs 202 and 204. Those skilled in the art will appreciate that the thermal isolating reliefs 202 and 204 may be any variety of shapes and may contain any variety of thermal insulating materials.

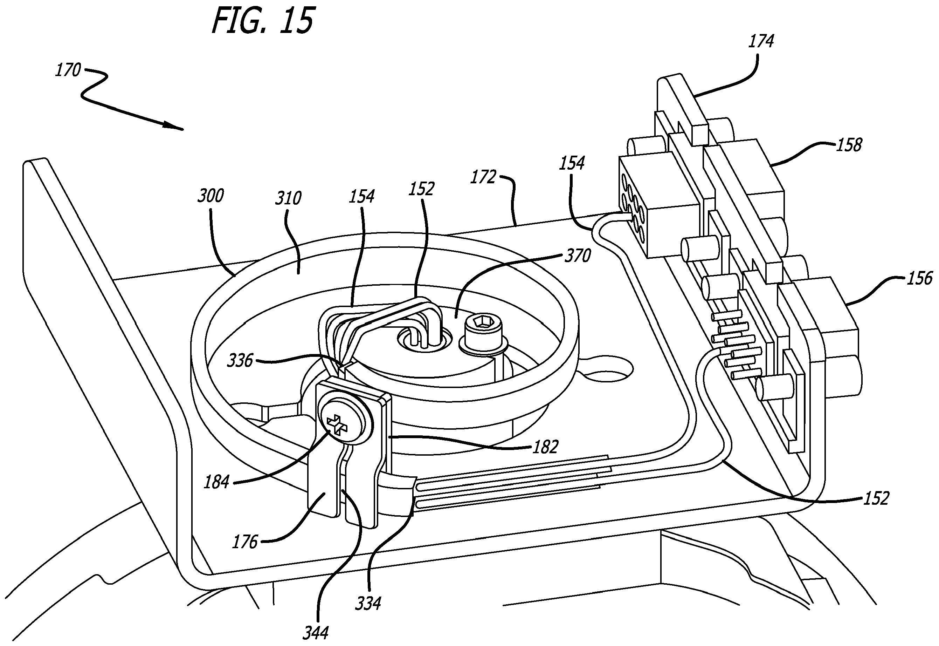

FIGS. 8, 12A, 15 and 16 show various views of the interface assembly 170. In the illustrated embodiment, the interface assembly 170 is configured to provide electrical communication between the shaft heater 150, the body heaters 142 and the control system 24. At least one valve body adaptor 139 configured to mechanically couple the interface assembly 170 to the valve assembly 100 may extend from the valve body 110 to the enclosure frame 172. In one embodiment, the valve body adaptor 139 may be configured to minimize or prevent the transfer of thermal energy from the valve body 110 to the interface assembly 170. As such, the valve body adaptor 139 may be made from a variety of materials with low thermal conductivity (thermal insulating), such as those described above with respect to the valve body adaptor 140. Optionally, the valve body adaptor 139 need not be made from a thermal insulating material. As shown in FIG. 15, the interface assembly 170 includes at least one enclosure frame 172 configured to mount various components thereto. At least one passage 188 configured to allow extension of the shaft 122 into the interface assembly 170 may be formed in the enclosure frame 172. At least one cover (not shown) configured to protect the components in the interface assembly may be detachably coupled to the enclosure frame 172. In the illustrated, the interface assembly is located below the valve body 110. Optionally, the interface assembly 170 may be located above the valve body 110.

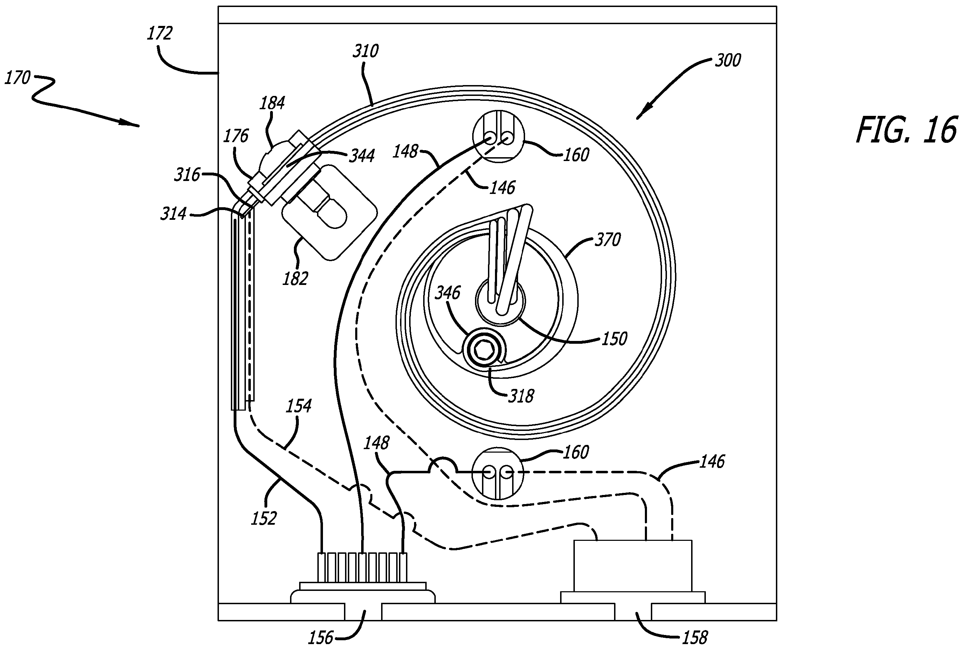

As shown in FIG. 15, at least one first connector 156 configured to accept and secure the sensor conductors 152 may be attached to at least one plate member 174 formed on or attached to the enclosure frame 172. At least one second connector 158 configured to accept and secure the heater power conductors 154 may be attached to the plate member 174. During use, external connectors (not shown) configured to electrically communicate with, drive, or control the heater assembly 150 may be connected to the connectors 156 and 158. Alternatively, the heater power and sensor conductors 152, 154 (also referred to collectively as "the heater conductors 152, 154") may be connected to a single connector. The other end of the heater conductors 152, 154 may be securely coupled to the shaft heater 150. Optionally, at least one intermediate electrical connector (not shown) configured to accept the heater conductors 152, 154 may be attached to the plate member 174. At least one bracket or stationary member 182 configured to accept and securely retain various components of a strain relief assembly 300 (described below) may be formed on or secured to the enclosure frame 172. FIG. 16 shows the routing of the body heater power and sensor conductors 146, 148 (also referred to as "the body heater conductors 146,148") through one or more conductor passages 160 formed in the enclosure frame 172. For the sake of clarity, the body heater conductors 146, 148 are not shown in FIG. 15. As shown in FIG. 16, in the illustrated embodiment, the body heater conductors 146, 148 are routed to the second connector 158 mounted in the plate member 174. Optionally, the body heater conductors 146, 148 may be routed to a separate connector (not shown).

FIGS. 12A-B, and 13-17 show various views of an electrical conductor strain relief assembly 300 configured to reduce or eliminate stress and strain of the heater conductors 152, 154 during the change in angular orientation of the closure member 104, shaft 122 and heater 150 relative to the valve body 110 or interface assembly 170 during operation of the valve assembly 100. As shown in FIG. 12B, in the illustrated embodiment, at least one spring or flexible member 310 and the heater conductors 152, 154 may be routed through and secured within at least one conduit passage 332 formed in at least one conduit 330. In the illustrated embodiment, the flexible member 310 is made from a ribbon of spring steel having a substantially rectangular cross-section. Optionally, the flexible member 310 may be made from a spring wire with a substantially circular cross-section. Those skilled in the art will appreciate that the flexible member 310 may be made from any variety of materials with any variety of cross-sectional shapes. One or more pairs of auxiliary conductors 162 may also be routed through and secured within the conduit passage 332. In the illustrated embodiment, the conduit 330 is a heat-shrink tubing material configured to retain the conductors 152, 154 in contact with the flexible member 310. Exemplary heat-shrink tubing materials include, without limitation, polyolefin, fluorinated ethylene propylene (FEP), Kynar^{®} (polyvinylidene fluoride), PVC, silicone rubber, PTFE or Viton, although those skilled in the art will appreciate that the conduit 330 may be made of any variety of heat-shrink materials. The heat-shrink material of the conduit 330 may also include an adhesive configured to bond the heat-shrink material to the heater conductors 152, 154 and the flexible member 310. Optionally, the conduit 330 may be made of a heat-shrink fabric such as Shrinkflex^{®} fabric material. Alternatively, the conduit 330 may be made of braided materials such as fiberglass, metals, Kevlar^{®}, Nomex^{®}, Halar^{®}, flame retardant PET, nylon, rayon or cotton. Optionally, the conduit 330 need not be made of heat-shrinkable materials. Those skilled in the art will appreciate that any variety of materials may be used for the conduit 330. Optionally, the heater conductors 152, 154 may be bonded to the flexible member 310 with an adhesive such as epoxy or silicone, although those skilled in the art will appreciate that that any type of adhesive may be used, thereby not requiring a conduit 330. In the alternative, the heater conductors 152, 154 may be attached to the flexible member 310 with clamps, cable ties or by winding the flexible member 310 and the heater conductors 152, 154 with thread or ribbon. Those skilled in the art will appreciate that any variety of materials, devices or processes may be used to attach the heater conductors 152, 154 to the flexible member 310.

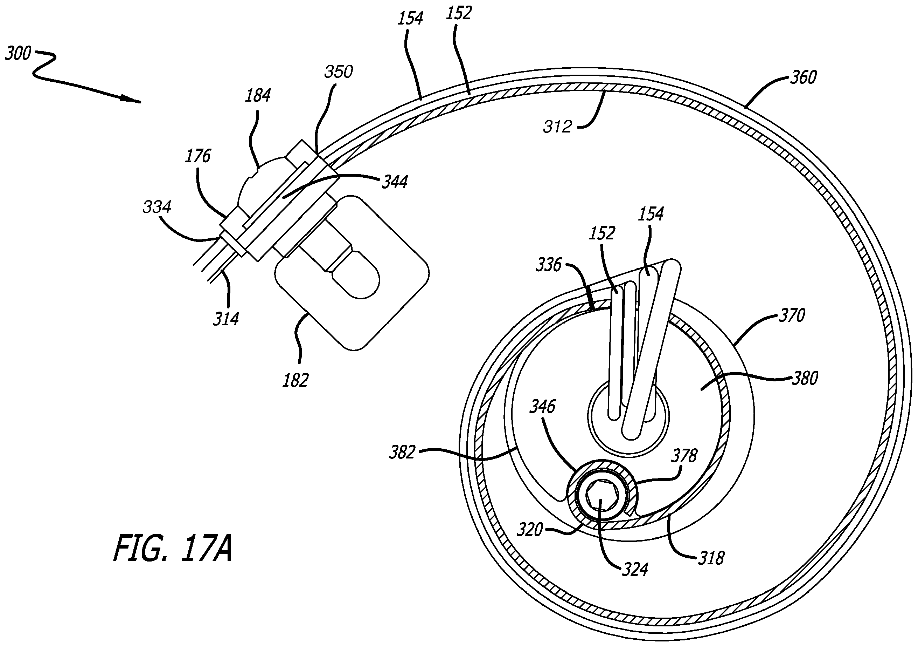

As shown in FIGS. 16 and 17A-C, in the illustrated embodiment, the flexible member 310 includes at least one flexible member body 312, at least one first end 314 and at least one second end 318. For the sake of clarity, FIGS. 16 and 17A show the strain relief assembly 300 without the conduit 330 covering the heater conductors 152, 154. At least one first connection member 316 may be formed on the first end 314 of the flexible member body 312. In the illustrated embodiment, the first connection member 316 is a flat portion formed on the flexible member body 312. In another embodiment, the first connection member 316 may be a hole or aperture formed in the first end 314 of the flexible member body 312. At least one second connection member 320 may be formed on or adjacent to the second end 318 of the flexible member body 312. In the illustrated embodiment, the second connection member 320 is a roughly circular hook or eye configured to be attached to the adaptor 370 (described below). In another embodiment, the second connection member 320 may be a hole or aperture formed in the flexible member 310. Those skilled in the art will appreciate that the first connection member 316 and the second connection member 320 may be any variety of shapes.

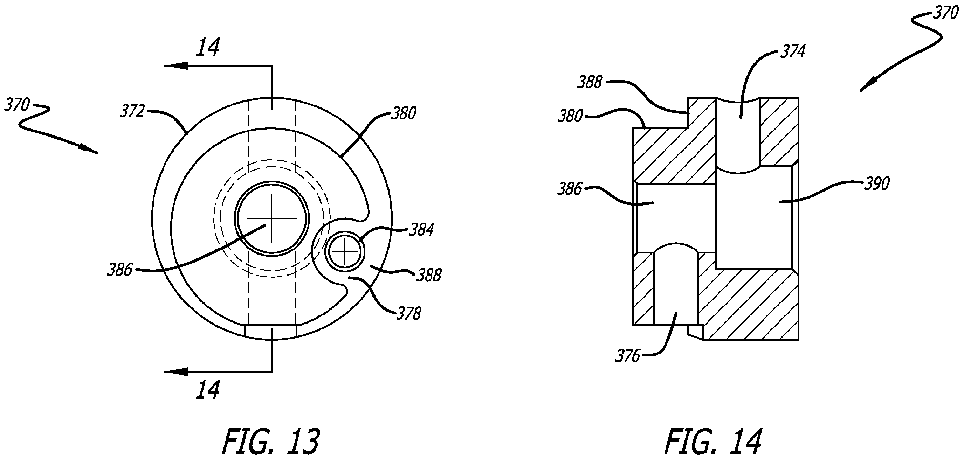

As shown in FIGS. 12A-17C, in the illustrated embodiment, the strain relief assembly 300 is coupled to the shaft 122 and the shaft heater 150 by at least one adaptor 370. FIGS. 13-14 show views of the adaptor 370. Optionally, the strain relief assembly 300 may be coupled to the shaft 122 directly, without the adaptor 370. As shown, the adaptor 370 includes at least one adaptor body 372. In the illustrated embodiment, the adaptor body 372 is made of a material with low thermal conductivity configured to reduce the rate of transfer of thermal energy between the shaft heater 150 and the electrical conductor strain relief 300. Exemplary materials with low thermal conductivity have been discussed above with respect to the insert body 232. Optionally, the adaptor body 372 may be made from any variety of materials. At least one shaft passage 390 configured to accept and retain the shaft 122 and shaft heater 150 therein may be formed in the adaptor body 372. At least one first locking member passage 374 configured to allow at least one locking member (not shown) to traverse therethrough may be formed in the adaptor body 372. At least one heater passage 386 configured to allow the shaft heater 150 and the heater conductors 152, 154 to traverse therethrough may be formed in the adaptor body 372. At least one second locking member passage 376 configured to allow at least one second locking member (not shown) to traverse therethrough may also be formed in the adaptor body 372. In the illustrated embodiment, the adaptor 370 is securely coupled to the shaft 122 by a first locking member, and the adaptor 370 is securely coupled to the shaft heater 150 by a second locking member. Exemplary locking members include set screws, cap screws, machine screws, and the like. Optionally, the adapter 370 may be secured to the shaft heater 150 and the shaft 122 by a single locking member. In another embodiment, the shaft 122 and shaft heater 150 may be bonded to the adapter 370 using one or more adhesives. In another embodiment, the adaptor 370 may be secured to the shaft 122 by threads (not shown) formed on the shaft 122 and mating threads (not shown) formed in the shaft passage 390. Likewise, the adaptor 370 may be secured to the shaft heater 150 by threads formed on the shaft heater 150 and threads (not shown) formed in the heater passage 386. In another embodiment, the shaft 122 and may be secured to the adaptor 370 by a press-fit between the diameter of the shaft 122 and the shaft passage 390. Likewise, the shaft heater 150 may be secured to the adaptor 370 by a press-fit between the diameter of the shaft heater 150 and the heater passage 386. Those skilled in the art will appreciate that the adaptor 370 may be secured to the shaft 122 and the shaft heater 150 by any variety of locking members or configurations.

Referring again to FIGS. 13 and 14, at least one spring boss or protrusion 380 configured to contact the flexible member body 312 may be formed on or attached to the adaptor body 372 adjacent to one or more surfaces 388. In the illustrated embodiment, the protrusion 380 has a generally circular shape that is offset from the center of the adaptor body 372, although those skilled in the art will appreciate that the protrusion 380 may be any shape and need not be offset from the center of the adaptor body 372. At least one notch or recess 378 configured to receive the second connection member 320 may be formed on the second end 318 of the flexible member body 312 may be formed in the protrusion 380 and/or the adaptor body 372. At least one fastener passage 384 configured to accept at least one fastener 324 may be formed in the adaptor body 372, extending from the surface 388 into the adaptor body 372. As shown in FIGS. 15-17A, the fastener 324 is configured to engage the second connection member 320 of the flexible member 310 and the fastener passage 384, thereby securely coupling the second end 318 of the flexible member 310 onto the surface 388 within the recess 378 formed in the protrusion 380 of the adaptor body 372. In the illustrated embodiment, the fastener 324 is a socket head cap screw, though those skilled in the art will appreciate that any variety of fastening device may be used to secure the second connection member 320 within the recess 378 of the adaptor 370. In the illustrated embodiment, while the second connection member 320 is secured to the adaptor 370 by the fastener 324, it is free to rotate around the fastener 324 when the adaptor 370 undergoes a change in angular orientation with respect to the interface assembly 170. Optionally, the second connection member 320 may be secured to the adaptor 370 so that it is not free to rotate around the fastener 324 when the adaptor 370 undergoes a change in angular orientation with respect to the interface assembly 170.

Referring again to FIGS. 15-17C, during operation of the valve system 50, the valve closure member 104, shaft 122, and shaft heater 150 undergo a change in angular orientation relative to the connectors 156, 158 in the interface assembly 170. In one embodiment, the change in angular orientation of the valve components relative to the interface assembly 170 during an exemplary CVD cycle is between about 10° and 20°. In another embodiment, the change in angular orientation may be from about 0° to about 90°. Without the use of a strain relief device, the change in angular orientation of the shaft heater 150 may result in tensile stress or strain, bending stress or strain, and/or torsional stressor strain (or any combination thereof), in the heater conductors 152, 154. The stress/strain in the heater conductors 152, 154 may exceed the elastic limit of the conductor material, thereby resulting in plastic deformation, hardening, fatigue and eventual mechanical and electrical failure of the conductors 152 and 154, thereby resulting in failure of the shaft heater 150 and failure of some of the heating features of the valve system 50. The stress in the shaft heater conductors 152, 154 may not exceed the elastic limit of the conductor material, though, even at this lower stress, after a number of cycles of the valve's operation, such stress on the heater conductors 152, 154 may result in fatigue failure of the heater conductors 152, 154.

As shown in FIGS. 15-17C, the strain relief assembly 300 is wound between at least one first connection area 344 and at least one second connection area 346. In the illustrated embodiment, the flexible member 310 winds clockwise approximately one and one-half turns from the first connection area 344 to the second connection area 346. Those skilled in the art will appreciate that the flexible member 310 may wind any number of turns between the first connection area 344 and the second connection area 346. In another embodiment, the flexible member 310 may be wound counterclockwise starting at the first connection area 344. Just before the first connection area 344, the heater conductors 152, 154 enter the conduit 330 at least one conduit entrance 334 located proximate to the first connection area 344, before the flexible member 310 begins to curve. Those skilled in the art will appreciate that the conduit entrance 334 may not be located proximate to the first connection area 344. In the illustrated embodiment, the first connection member 316 of the flexible member 310, the conduit 330, and the heater conductors 152, 154 are securely attached to the enclosure frame 172 of the interface assembly 170 at the first connection area 344 with at least one clamping member 176 coupled to the stationary member 182 with at least one fastener 184. In the illustrated embodiment, the strain relief assembly 300 is wound in a clockwise direction starting at the first connection area 344.

As shown in FIGS. 15-17C, in the illustrated embodiment, the flexible member 310 has a curvilinear or an approximately involute spiral shape. Alternative spiral shapes include, without limitation, equiangular spiral, logarithmic spiral, Nautilus shell spiral, golden spiral, Fibonacci spiral, Archimedean spiral, Euler spiral, Poinsot's spiral, Nielsen's spiral, Atzema spiral, or hyperbolic spiral. Further, the shape of the flexible member may be similar to that of a watch spring, traction spring, power spring or clock spring. Those skilled in the art will appreciate that the flexible member 310 may have any variety of spiral shapes or combinations of spiral shapes. In the alternative, the flexible member 310 may have a shape with on self-similar structure based on fractal geometry, or a non-spiral shape. Also, it will be appreciated that the spiral shapes listed above are based on mathematical formulas, and that the actual shape of the flexible member 310 as installed in the interface assembly 170 may not exactly follow those mathematical formulas.

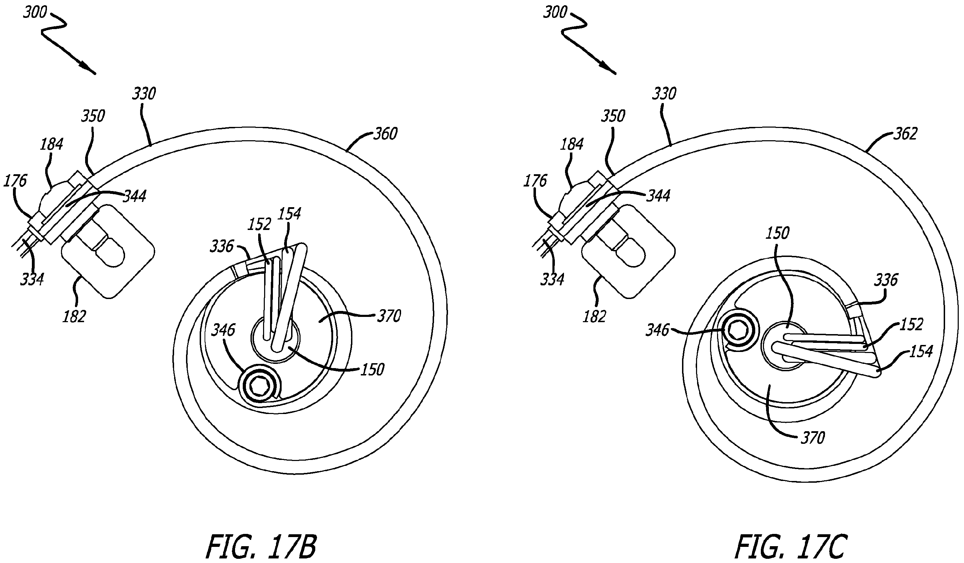

FIG. 17A shows the contact between the flexible member body 312 and the adaptor 370 as the flexible member 310 approaches the second connection area 346. As shown, the flexible member body 312 begins to contact the surface 382 of the protrusion 380 formed on the adaptor 370. As described above, in the illustrated embodiment, before the flexible member 310 contacts the surface 382 of the protrusion 380, the shaft heater conductors 152, 154 exit the conduit 330 at a conduit exit 336 and are routed to the shaft heater 150. As shown in FIGS. 17B and 17C, in the illustrated embodiment, during operation of the valve assembly 100, the shape of the flexible member 310 changes when the angular orientation of the closure member 104 changes. For example, FIG. 17B shows the strain relief assembly 300 when the closure member 104 is in a closed position (referring to FIG. 4A, when θ = 0°). FIG. 17C shows the strain relief assembly 300 when the closure member 104 is in a fully open position (referring to FIG. 4A, when θ = 90°). Essentially, in the illustrated embodiments, all of the deflection in the flexible member 310 due to the change in angular orientation of the shaft heater 150 occurs in the involute spiral portion 360 of the flexible member 310. When the adaptor 370 moves from the closed position shown in FIG. 17B to the open position shown in FIG. 17C, the initial spiral shape 360 changes to a second spiral shape 362, thereby eliminating any relative motion between the conductors 152, 154 and the clamping member 176 at the point 350 where the flexible member 310 begins to curve, as well as any relative motion between the conductors 152, 154 and the shaft heater 150 at the conduit exit 336, thereby reducing or eliminating any stress in the heater conductors 152, 154. As such, operation of the valve system 50 does not result in failure of the shaft heater conductors 152 and 154.

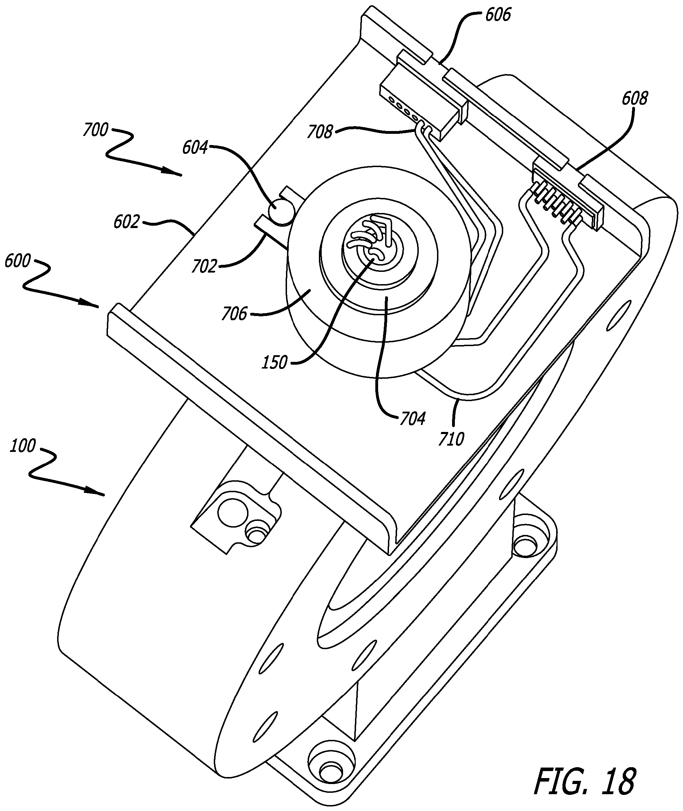

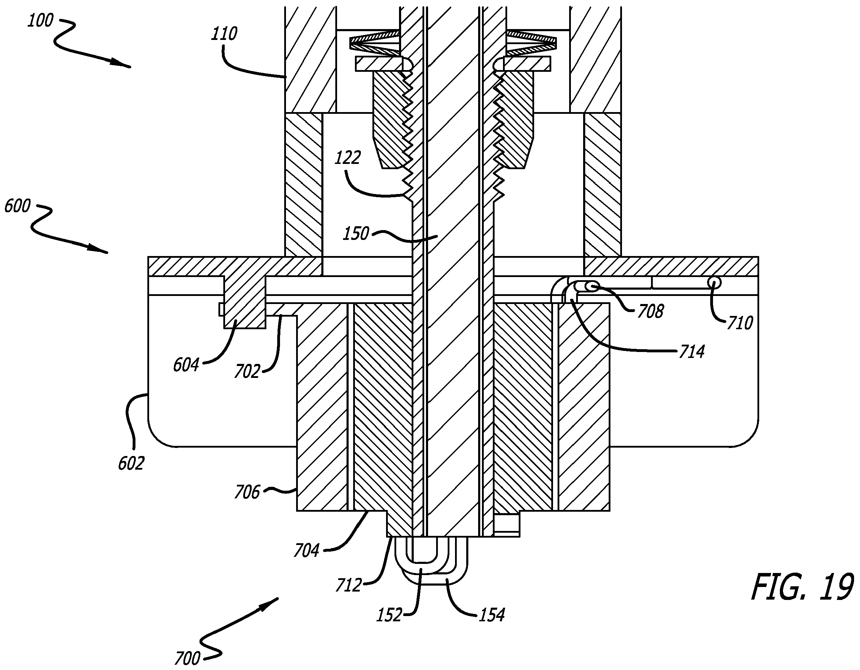

FIGS. 18-19 show views of an embodiment of the valve assembly 100, using an alternative interface assembly 600 and at least one slip ring electrical connector assembly 700 (hereinafter referred to as "slip ring 700") configured to provide electrical communication between the shaft heater 150 and the connectors mounted on the interface assembly, when the shaft heater 150 rotates relative to the interface assembly 600. Specifically, the slip ring 700 is configured to transmit electrical signals from the heater conductors 152, 154 of the rotating shaft heater 150 to their respective stationary connectors 606 and 608 mounted on the interface assembly 600.

FIG. 18 shows a perspective view of the interface assembly 600. As shown, the interface assembly 600 includes at least one enclosure frame 602 with at least one heater power connector 606 and at least one heater sensor connector 608 mounted thereto. As shown, the slip ring 700 includes at least one slip ring rotating housing ("rotor") 704 configured to be securely attached to the valve shaft 122, and at least one slip ring stationary housing ("stator") 706 configured to be securely attached to the enclosure frame 602. The slip ring 700 further includes at least one slip ring entrance 712 formed on the slip ring rotor 704, and at least one slip ring exit 714 formed on the slip ring stator 706. The heater conductors 152, 154 extend from the shaft heater 150 to the slip ring entrance 712. In the illustrated embodiment, the slip ring entrance 712 and slip ring exit 714 extend from opposing ends of the slip ring 700. Those skilled in the art will appreciate that the slip ring entrance 712 and slip ring exit 714 may extend from the same end of the slip ring 700. Those skilled in the art will appreciate that any variety of slip ring configurations may be used with the slip ring assembly 700.

In the illustrated embodiment, the slip ring 700 also includes one or more conductors 708 and 710 extending from the slip ring exit 714, the conductors 708 and 710 configured to transmit electrical signals from the heater conductors 152 and 154, respectively, connected to the slip ring entrance 712 on the slip ring rotor 704, to the connectors 606 and 608, respectively. At least one tab 702 configured to mechanically couple the slip ring 700 to the enclosure frame 602 extends from the slip ring stator 706. At least one locking member 604 may extend from the enclosure frame 602, the locking member 604 configured to engage the tab 702 and prevent the slip ring stator 706 from rotating. In the illustrated embodiment, the locking member 604 is a stud extending from the enclosure frame 602. In another embodiment, the locking member 604 may be a fastener. Optionally, a locking member 604 need not be used, as the slip ring stator 706 may be secured to the enclosure frame 602 directly. During use, the valve shaft 122 and shaft heater 150 undergo a change in angular orientation relative to the interface assembly 600. The shaft heater conductors 152, 154 attached to the slip ring rotor 704 do not move relative to the shaft heater 150. As a result, any stress or strain on the heater conductors 152, 154 is reduced or eliminated.

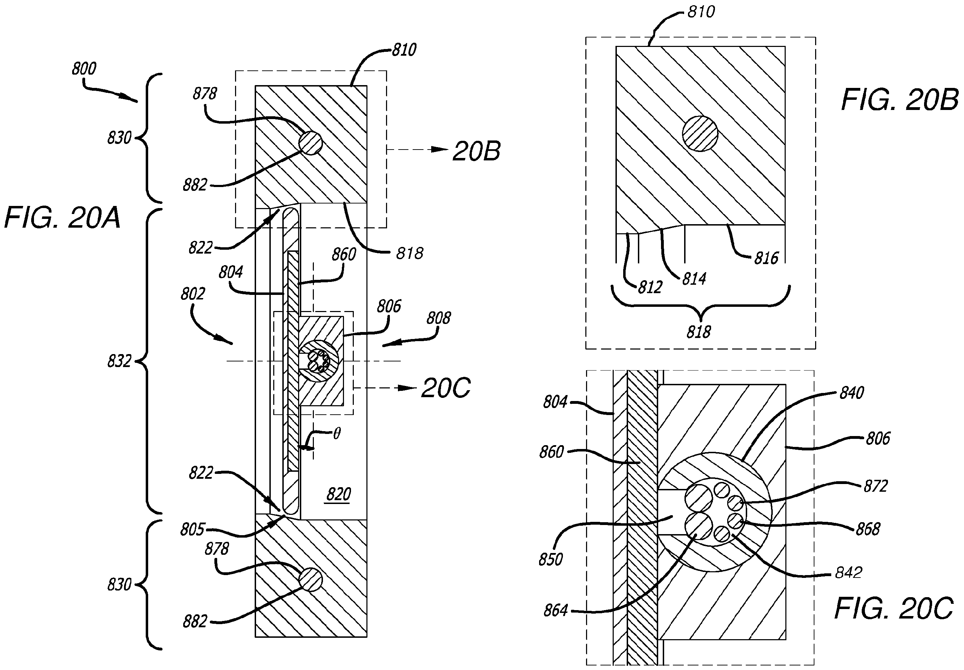

FIGS 20A-23 show various views of an embodiment of a valve assembly 800 with at least one heater assembly 860 located in at least one valve closure member 804 (also referred to as "closure member"). Many of the aspects, configurations, structures, and alternatives of the valve assembly 800 are analogous to those of the valve assembly 100 described in detail above. FIGS. 20A-20C show various cross-sectional views of the valve assembly 800. As shown in FIG. 20B, the valve body 810 includes at least one sidewall 818 defined by at least one first bore 812, at least one second bore 816 and at least one tapered region 814 between the first bore 812 and the second bore 816. Alternatively, the sidewall 818 may only have a single bore with no tapered region. The sidewall 818 and the closure member 804 define the area of a valve passageway 820. For example, as shown in FIG. 20A, the valve passageway 820 is defined as the circular area of the valve body 810 at the tapered region 814 minus the area blocked by the closure member 804. Optionally the valve passageway may be defined as the circular area of the valve body 810 at the first bore 812 or the second bore 816. The valve passageway 820 defines at least one inlet port 802 upstream of the closure member 804 and at least one outlet port 808 downstream of the closure member 804. The closure member 804 is configured to reduce the size of the valve passageway 820, thereby maintaining a difference in pressure between the inlet port 802 and the outlet port 808, thereby restricting flow from the inlet port 802 to the outlet port 808. In one embodiment, the valve assembly 800 is configured to maintain a difference in positive pressure between the inlet port 802 and the outlet port 808. In another embodiment, the valve assembly 800 is configured to maintain a difference in negative pressure between the inlet port 802 and the outlet port 808. In the illustrated embodiment, the closure member 804 has a generally circular shape, with at least one periphery 805, although those skilled in the art will appreciate that the closure member 804 may be any variety of shapes.

Referring again to FIGS. 20A-C, in the illustrated embodiment, at least one shaft 840 configured to adjust the angular orientation of the closure member 804 traverses through the valve passageway 820. In the illustrated embodiment, the closure member 804 is mechanically coupled to the shaft 840 by at least one clamp body 806. Optionally, the closure member 804 may be formed integral to the shaft 840. As described above with respect to the valve assembly 100, during use, a driver assembly 60 provides an actuating force to change the angular orientation of the closure member 804 at an angle θ relative to the valve body 810, thereby controllably adjusting the area of the valve passageway 820. FIG. 20A shows the valve assembly 800 with the closure member 804 oriented at an angle θ = 0° relative to the centerline of the valve body 810 (also referred to as the "closed position"). The area of the valve passageway 820 is at a minimum when the closure member 804 is in the closed position. As shown in FIG. 20A-B, in the closed position, a gap 822 may exist between the periphery 805 of the closure member 804 and the sidewall 818. In the closed position, the gap 822 may be zero. As the valve opens, the angle θ, the gap 822 and the area of the valve passageway 820 all increase.

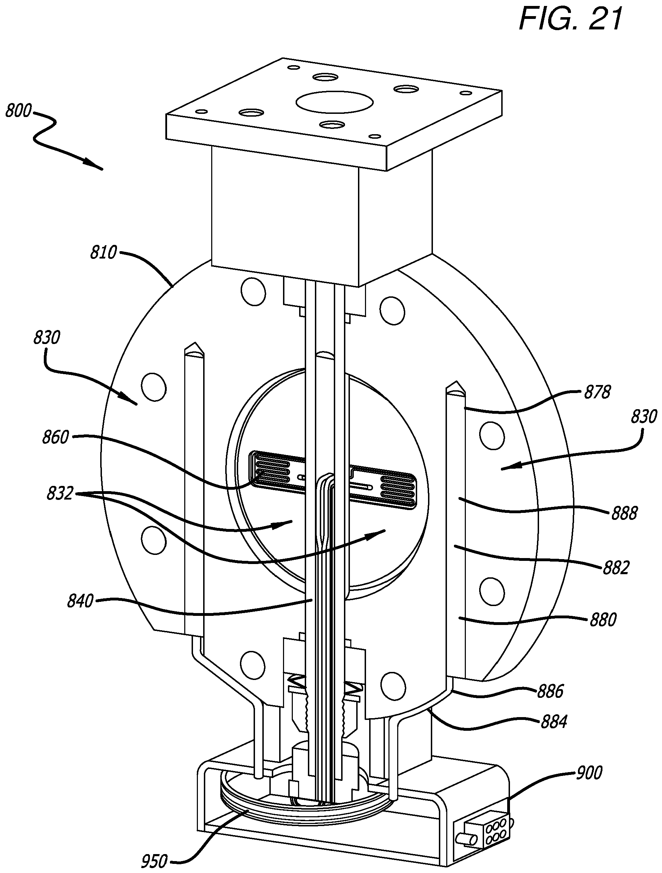

As shown in FIGS. 20A and 21, one or more body heater passages 878 configured to accept one or more valve body heating elements 882 of one or more body heaters 880 may be formed in the valve body 810. In the illustrated embodiment, the body heaters 880 include one or more temperature sensors 888 formed on or integral thereto, the temperature sensors 888 configured to send an electrical signal to the control system 24, thereby permitting the user to control the body heaters 880, thereby controlling the temperature of the valve body 810 and other valve components in at least one first heating zone 830. Exemplary designs, materials and configurations of the body heaters 880 and associated temperature sensors 888 have been described above with respect to the valve assembly 100. In the illustrated embodiment, the first heating zone 830 comprises the valve body 810. The body heaters 880 further include one or more body heater power conductors 884 and one or more body heater sensor conductors 886 (also referred to as the "body heater conductors 884, 886") configured to transmit electrical power and signals between the body heaters 880 and the control system 24 extend from the body heaters 880 to at least one interface assembly 900.

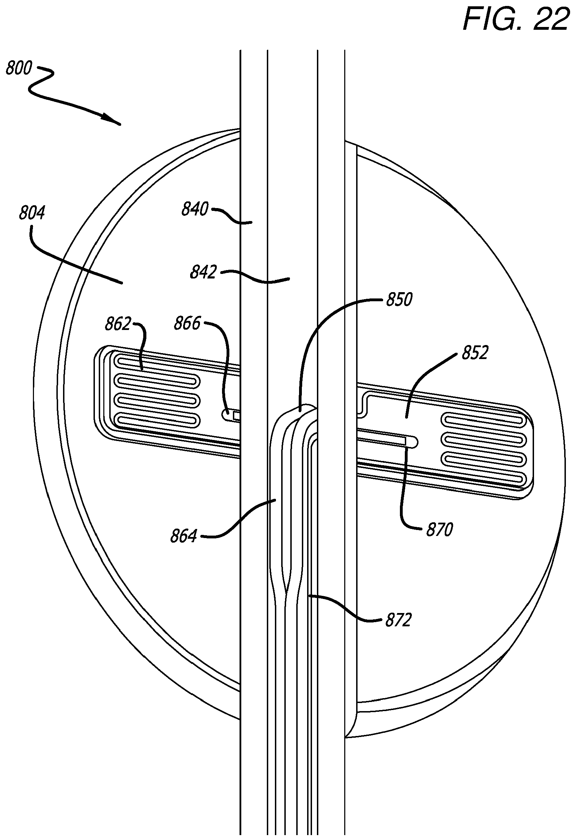

As shown in FIGS. 21 and 22, in the illustrated embodiment, at least one recess 852 configured to receive at least one closure member heater 860 therein is formed in the closure member 804. During use, the closure member heater 860 may be used to control the temperature of the valve 800 in a second heating zone 832. In the illustrated embodiment, the second heating zone 832 includes the closure member 804 and the valve shaft 840, though those skilled in the art will appreciate that the second heating zone 832 may include any of the components or areas of the valve assembly 800. Also, those skilled in the art will appreciate that thermal energy may be transferred between the first heating zone 830 and the second heating zone 832, for example, where the shaft 840 traverses through the valve body 810 and the other valve components shown in FIG. 21. Those skilled in the art will appreciate that there may be any number of heating zones in the valve assembly 800.

In the illustrated embodiment, the closure member heater 860 includes at least one heating element 862, at least one control sensor 866, and at least one safety sensor 870 positioned within the recess 852. Exemplary sensors have been described above with respect to the heater sensor 153. In the illustrated embodiment, the heating element 862 and the sensors 866, 872 may be potted in place by a dielectric or refractive material (not shown), such as magnesium oxide, configured to prevent the effluents flowing through the valve passageway 820 from damaging the heating element 862. Alternatively, or, in addition to the dielectric or refractive material, a cover (not shown) may be used to seal the recess 852 from the valve passageway 820. In the illustrated embodiment, the heating element 862 is a resistive wire or trace configured to convert electrical current to thermal energy. Those skilled in the art will appreciate that any variety of heating materials or configurations may be used. In this embodiment, the control sensor 866 and the safety sensor 870 are thermal sensors or thermocouples in electrical communication with the control system 24 and configured to provide an electrical signal proportional to the temperature of the closure member 804. Exemplary and alternative thermal sensors are described above with respect to the heater sensors 149 and 153. Those skilled in the art will appreciate that any variety of thermal sensor types may be used in the control sensor 866 and the safety sensor 870. In the event of a fault in the heating element 862 and/or the control sensor 866, an electrical signal from the safety sensor 870 may cause the control system to shut down the valve assembly 800 or the entire CVD system 10, depending on the severity of the fault and the type of process being run by the CVD system 10. Optionally, the closure member heater 860 may not include a safety sensor 870. As shown in FIGS. 20A-22, the heating element 852 extends away from the shaft 840 in two directions. Those skilled in the art will appreciate that the heating element 852 may extend away from the shaft 840 in any number of directions. At least one conductor passage 850 may be formed in the shaft 840, the conductor passage 850 configured to route one or more heater power conductors 864, one or more control sensor conductors 868, and one or more safety sensor conductors 872 therethrough to be connected to the heating element 862, the control sensor 866, and the safety sensor 870, respectively. As shown in FIGS. 20C and 22, the shaft 840 has a shaft passage 842 formed therein, the shaft passage 842 configured to allow the conductors 864, 868 and 872 to traverse therethrough to at least one interface assembly 900 and at least one electrical conductor strain relief 950.

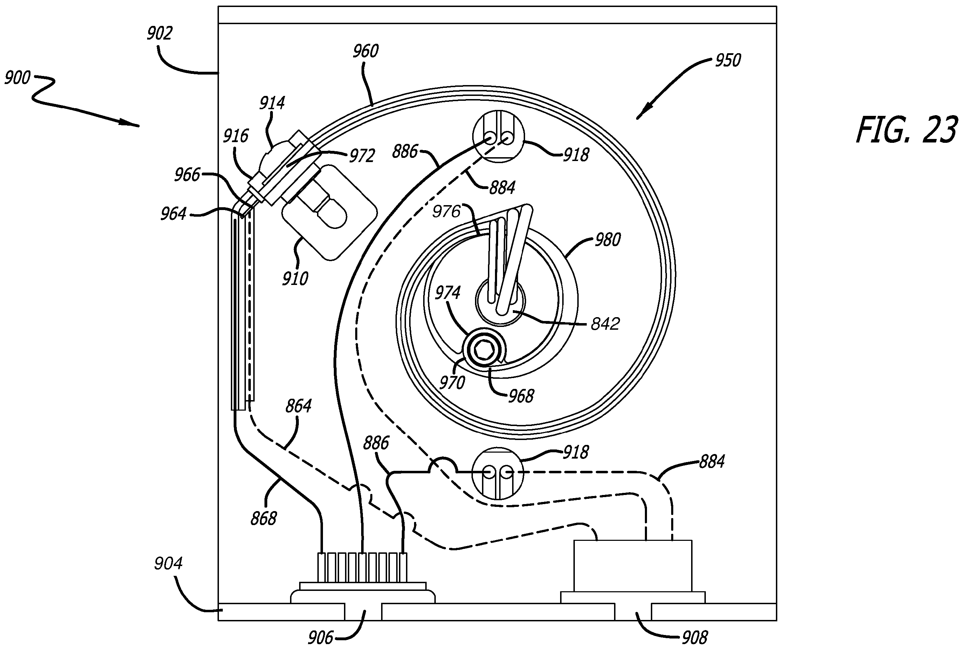

FIG. 23 shows a view of the interface assembly 900 configured to route the closure member heater conductors 864, 868, 872 and the body heater conductors 884, 886 to one or more connectors 906 and 908. For the sake of clarity, the sensor conductors 872 are not shown in FIG. 23. As shown, the interface assembly 900 includes at least one enclosure frame 902 with at least one wall or plate member 904 formed thereon. In the illustrated embodiment, the connectors 906, 908 are mounted to the plate member 904. One or more passages 918 configured to allow the body heater conductors 884, 886 to pass therethrough are formed on the enclosure frame 902. In the illustrated embodiment, the closure member heater power conductors 868 and the body heater power conductors 886 are connected to the connector 906. The closure member sensor conductors 868, 872 are connected to the connector 908. Those skilled in the art will appreciate that all of the conductors may be connected to a single connector.

Referring again to FIG. 23, the interface assembly 900 further includes at least one electrical conductor strain relief assembly 950 configured to route the closure member heater conductors 864, 868, 872 from the shaft passage 842 to the connectors 906, 908. The aspects, configurations, structures, shapes, and alternatives of the electrical conductor strain relief 950 are analogous to those of the electrical conductor strain relief assembly 300 described in detail above as used with the valve assembly 100 (see FIG. 12A). As shown, the strain relief assembly 950 includes at least one flexible member 960 with at least one first end 964 with at least one first connection member 966 formed thereon. At least one second connection member 970 is formed on the second end 968 of the flexible member 960. The second connection member 970 is configured to be secured within at least one recess 974 formed in at least one adaptor 980 by at least one fastener. The flexible member 960 and conductors 864, 868, 872 are routed through at least one conduit (not shown) configured to secure the conductors to the flexible member 960, exiting the conduit at a conduit exit 976 located proximate to the location where the flexible member 960 makes contact with the adaptor 980. Various configurations of the conduit are described above with respect to the conduit 330 of the strain relief assembly 300. The flexible member 960 and the heater conductors 864, 868, 872 are wound between a first connection area 972 and a second connection area 974. The flexible member 960 and the heater conductors 864, 868, 872 are secured to at least one bracket or stationary member 910 by at least one clamping member 916 and at least one fastener 914. The shape of the flexible member 960 as shown in FIG. 23 is an approximately involute shape, though alternative shapes may be used, such as those described above with respect to the strain relief assembly 300. During use, the strain relief assembly 950 protects the conductors 864, 868, 872 from stress and strain due to changes in the angular orientation of the closure member 804.

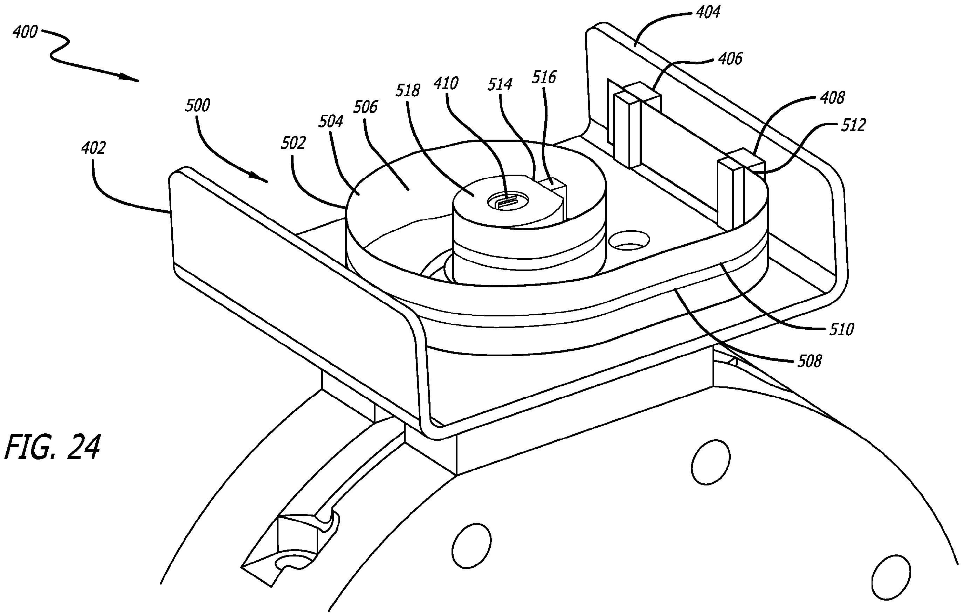

FIG. 24 shows a view an embodiment of an interface assembly 400 and an electrical conductor strain relief assembly 500. As shown, the interface assembly 400 includes at least one enclosure frame 402 with one or more terminal blocks or connector members 406 and 408 in electrical communication with one or more electrical connectors (not shown) mounted to one or more plate members 404 formed on or attached to the enclosure frame 402. The strain relief assembly 500 may be provided as a flexible circuit 502 with a flexible circuit body 504 wound between at least one first connection area 512 and at least one second connection area 514. One or more supplementary flexible members 506, such as a spring, configured to provide support or flexibility to the flexible circuit 502 may be formed on or attached to the flexible circuit body 504. In the illustrated embodiment, the flexible circuit 502 includes heater conductors 508 and 510 formed as conductive traces or wires deposited on or attached to a flexible circuit body 504, the heater conductors 508, 510 configured to provide electrical communication between at least one heater 410 and the connector members 406, 408. In the illustrated embodiment, the flexible circuit body 504 is formed of a flexible circuit material. Exemplary flexible circuit materials include, without limitation, polyester (PET), polyimide (PI), polyethylene naphthalate (PEN), polyetherimide (PEI), or various fluoropolymers (FEP) and copolymers. In another embodiment, the flexible circuit body 504 may be provided as a wired ribbon or a flat ribbon cable with discrete heater conductors 508, 510.

While a heated throttle valve apparatus and method of use or manufacture are disclosed by reference to the various embodiments and examples detailed above, it should be understood that these examples are intended in an illustrative rather than limiting sense, as it is contemplated that modifications will readily occur to those skilled in the art which are intended to fall within the scope of the present invention.

Further examples of the present disclosure are set out in the following numbered clauses.

Clause 1: A thermal isolating drive coupler, comprising at least one first driving member including with at least one first driving member body with at least one first plate body formed thereon, the at least one first plate body having at least one first plate body surface formed thereon one or more first engaging members extending from the first plate body surface; at least one second driving member including at least one second driving member body having at least one second driving member body surface formed thereon; one or more second engaging members extending from the at least one second driving member body surface; and at least one coupling insert including at least one insert body formed from at least one material with a thermal conductivity below about 2.0 W/(m°K), the at least one insert body including at least one first insert body surface with at least one first contact area formed thereon, the at least one insert body further including at least one engaging member passage formed therein, and configured to accept the at least one of the at least one first engaging member and the at least one second engaging member therein.

Clause 2: The thermal isolating drive coupler of clause 1, further comprising at least one second insert body surface with at least one second contact area formed thereon.

Clause 3: The thermal isolating drive coupler of clause 1, further comprising at least one first thermal isolating relief located between the at least one first plate body surface of the at least one first driving member body and the at least one first insert body surface, the at least one first thermal isolating relief configured to reduce the transfer of thermal energy between the at least one first driving member body and the at least one insert body.

Clause 4: The thermal isolating drive coupler of clause 2, further comprising at least one second thermal isolating relief located between the at least one second insert surface of the at least one insert body and the at least one second insert body surface of the second driving member body, the at least one second thermal isolating relief configured to reduce the transfer of thermal energy between the at least one insert body and the at least one second driving member body.

Clause 5: The thermal isolating drive coupler of clause 1, wherein at least one cavity is formed in the at least one insert body.

Clause 6: The thermal isolating drive coupler of clause 1, wherein the at least one first driving member includes four engaging members.

Clause 7: The thermal isolating drive coupler of clause 1, wherein the at least one first driving member includes three engaging members.

Clause 8: The thermal isolating drive coupler of clause 1, wherein the at least one first driving member includes two engaging members.

Clause 9: The thermal isolating drive coupler of clause 1, wherein the at least one first driving member includes one engaging member.

Clause 10: The thermal isolating drive coupler of clause 1, wherein the at least one material of the at least one insert body has a thermal conductivity below about 1.00 W/(m°K).

Clause 11: The thermal isolating drive coupler of clause 1, wherein the at least one material of the at least one insert body has a thermal conductivity below about 0.50 W/(m°K).

Clause 12: The thermal isolating drive coupler of clause 1, wherein the at least one material of the at least one insert body has a thermal conductivity below about 0.28 W/(m°K).

Clause 13: The thermal isolating drive coupler of clause 1, wherein the at least one material of the at least one insert body has a thermal conductivity below about 0.25 W/(m°K).

Clause 14: The thermal isolating drive coupler of clause 1, wherein the at least one material of the at least one insert body has a thermal conductivity below about 0.10 W/(m°K).

Clause 15: An electrical conductor strain relief, comprising: at least one flexible member with at least one curvilinear flexible member body with at least one first end and at least one second end; at least one pair of electrical conductors; and at least one conduit including at least one passage formed therein, the at least one passage having at least one entrance and at least one exit, the at least one passage sized to receive the at least one flexible member and the at least one pair of electrical conductors therein.

Clause 16: The electrical conductor strain relief of clause 15, wherein the at least one conduit is a heat-shrinkable material configured to secure the at least one pair of electrical conductors to the at least one flexible member.

Clause 17: The electrical conductor strain relief of clause 15, wherein the at least one flexible member has an approximately involute shape.

Clause 18: The electrical conductor strain relief of clause 15, wherein the at least one flexible member has an approximately spiral shape.

Clause 19: The electrical conductor strain relief of clause 15, wherein the at least one flexible member has a shape chosen from the group consisting of equiangular spiral, logarithmic spiral, Nautilus shell spiral, golden spiral, Fibonacci spiral, Archimedean spiral, Euler spiral, Poinsot's spiral, Nielsen's spiral, Atzema spiral, and hyperbolic spiral.

Clause 20: A valve assembly, comprising: at least one valve body with at least one sidewall, the valve body having at least one valve passageway formed therein, the valve passageway in communication with at least one inlet port and at least one outlet port formed in the at least one sidewall; at least one valve shaft with at least one closure member coupled thereto and configured to selectively undergo a change in angular orientation relative to the at least one valve body, thereby reducing size of the at least one valve passageway; at least one thermal isolating drive coupler, including at least one first driving member, at least one second driving member and at least one coupling insert positioned between the at least one first driving member and the at least one second driving member, the at least one coupling insert configured to transmit a rotational force from the at least one first driving member to the at least one second driving member, wherein the at least one coupling insert is made from a material with a thermal conductivity below about 0.28 W/(m°K); at least one shaft heater having at least one shaft heating element, the at least one shaft heater positioned within at least one shaft heater passage formed in the at least one valve shaft and in thermal communication with the at least one valve shaft and the at least one closure member, the at least one shaft heater configured to change the temperature of the at least one valve shaft and the at least one closure member; and at least one interface assembly in electrical communication with the at least one shaft heater, the at least one interface assembly including at least one electrical conductor strain relief configured to route at least one shaft heater power conductor from the at least one shaft heater to at least one electrical connector positioned on the at least one interface assembly.

Clause 21: The valve assembly of clause 20, further comprising: at least one shaft heater sensor in thermal communication with the at least one shaft heating element; and at least one shaft heater sensor conductor in electrical communication with the at least one shaft heater sensor and the at least one electrical connector.

Clause 22: The valve assembly of clause 20, further comprising at least one body heater positioned within at least one body heater passage formed in the at least one valve body and in thermal communication with the at least one valve body.

Clause 23: The valve assembly of clause 20, wherein the at least one shaft heater and the at least one valve shaft undergo a change in angular orientation relative to the at least one valve body and the at least one interface assembly.

Clause 24: The valve assembly of clause 23, wherein the change in angular orientation between the at least one shaft heater and the at least one interface assembly is more than about 10 degrees.

Clause 25: The valve assembly of clause 23, wherein the change in angular orientation between the at least one shaft heater and the at least one interface assembly is more than about 20 degrees.

Clause 26: The valve assembly of clause 23, wherein the change in angular orientation between the at least one shaft heater and the at least one interface assembly is more than about 45 degrees.

Clause 27: The valve assembly of clause 23, wherein the change in angular orientation between the at least one shaft heater and the at least one interface assembly is between about 45 degrees and about 90 degrees.

Clause 28: The valve assembly of clause 23, wherein the change in angular orientation between the shaft heater and interface assembly is more than about 90 degrees.

Clause 29: The valve assembly of clause 22 wherein the at least one shaft heater and the at least one body heater are controlled independently.

Clause 30: The valve assembly of clause 22, wherein the at least one shaft heater and the at least one body heater are not controlled independently.

Clause 31: The valve assembly of clause 20, wherein the operating temperature of the at least one valve closure member exceeds about 200°C.

Clause 32: The valve assembly of clause 20, wherein the operating temperature of the at least one valve closure member exceeds about 180°C.

Clause 33: The valve assembly of clause 20, wherein the operating temperature of the at least one valve closure member exceeds about 160°C.

Clause 34: The valve assembly of clause 20, wherein the electrical conductor strain relief comprises at least one flexible member with at least one flexible member body having at least one first end and at least one second end, the at least one flexible member body having at least one curvilinear shape; at least one pair of electrical conductors; and at least one conduit including at least one passage formed therein, the at least one passage sized to receive the at least one flexible member and the at least one pair of electrical conductors therein.

Clause 35: The valve assembly of clause 20, wherein the at least one electrical conductor strain relief comprises at least one slip ring electrical connector assembly including at least one slip ring rotor with at least one slip ring entrance, and at least one slip ring stator with at least one slip ring exit, the at least one slip ring rotor configured to route one or more electrical signals from at least one shaft heater power conductor from the at least one shaft heater to the at least one slip ring stator, the slip ring stator configured to route the electrical signals from the slip ring exit to the at least one electrical connector positioned on the at least one interface assembly.

Clause 36: The valve assembly of clause 35, wherein the slip ring rotor is configured to route one or more electrical signals from at least one shaft heater sensor conductor to the at least one electrical connector.

Clause 37: The valve assembly of clause 20, wherein the at least one electrical conductor strain relief comprises at least one flexible circuit assembly including at least one flexible circuit body with at least one pair of heater power conductors formed thereon or attached thereto, the at least one pair of heater power conductors configured to route one or more electrical signals from at least one shaft heater to the at least one electrical connector positioned on the at least one interface assembly.

Clause 38: The valve assembly of clause 37, further comprising at least one pair of heater sensor conductors formed on or attached to the at least one flexible circuit assembly, the at least one pair of sensor conductors configured to route one or more electrical signals from at least one shaft heater sensor to the at least one electrical connector.

Clause 39: A method of controlling a gap between a closure member and a valve body sidewall, comprising: providing at least one body heater coupled to at least one valve body having at least one sidewall with at least one inner dimension, the at least one body heater operative to change at least one temperature of the at least one valve body, thereby resulting in a change in the at least one inner dimension of the at least one sidewall; providing at least one shaft heater in thermal communication with at least one closure member, the at least one closure member having at least one periphery having at least one outer dimension, the at least one shaft heater operative to change at least one temperature of the at least one closure member, thereby resulting in a change in the at least one outer dimension of the at least one periphery of the at least one closure member; sensing the at least one temperature of the at least one closure member; sensing the at least one temperature of the at least one valve body; and controlling the temperatures of the at least one closure member and the at least one valve body, thereby resulting in a change of dimension of at least one gap between the at least one inner dimension of the sidewall and the at least one outer dimension of the at least one closure member.

Clause 40: The method of clause 39, wherein the temperatures of the at least one valve body and the at least one closure member are approximately equal.

Clause 41: The method of clause 39, wherein the temperatures of the at least one valve body and the at least one closure member are not equal.

Clause 42: The method of clause 39, further comprising providing at least one closure member heater positioned in thermal communication with the at least one closure member, the at least one closure member heater configured to control the temperature of the closure member in at least one third heating zone, thereby resulting in a change in at least one outer dimension of at least one the periphery of the at least one closure member.

Clause 43: A valve system, comprising: at least one driver assembly; at least one valve assembly including at least one valve body, wherein the at least one valve assembly includes at least one thermal isolating drive coupler configured to transmit a rotational force from the at least one driver assembly to at least one closure member via at least one valve shaft, the at least one valve assembly further comprising at least one shaft heater configured to control the temperature of the at least one closure member within at least one first heating zone, and at least one body heater configured to control the temperature of the at least one valve body in at least one second heating zone; at least one interface assembly in electrical communication with the at least one shaft heater and the at least one body heater, the at least one interface assembly including at least one electrical conductor strain relief configured to route at least one shaft heater power conductor and at least one shaft heater sensor conductor from the at least one shaft heater to at least one electrical connector positioned on the at least one interface assembly.

Clause 44: The valve system of clause 43, wherein the at least one shaft heater and the at least one valve shaft rotate together.

Clause 45: The valve system of clause 43, wherein the at least one shaft heater and the at least one body heater are controlled independently.

Clause 46: The valve system of clause 43, wherein the at least one shaft heater and the at least one body heater are not controlled independently.

## Claims

1. A valve assembly, comprising:
at least one valve body having at least one sidewall;
at least one first heater and at least one first heater sensor positioned in thermal communication with the at least one valve body, wherein the at least one first heater is configured to allow a user to control a temperature of the at least one valve body in at least one first heating zone;
at least one valve closure member, wherein the at least one valve closure member and the at least one sidewall define at least one valve passageway;
at least one valve shaft traversing through the at least one valve body and having the at least one valve closure member coupled thereto, the at least one valve shaft and the at least one closure member configured to selectively undergo a change in angular orientation relative to the at least one valve body, thereby resulting in a change in at least one area of the at least one valve passageway;
at least one second heater and at least one second heater sensor, the at least one second heater in thermal communication with the at least one valve shaft and the at least one valve closure member, the at least one second heater and the at least one second heater sensor configured to allow a user to control a temperature of the at least one valve closure member within at least one second heating zone; and
at least one interface assembly in electrical communication with the at least one second heater, the at least one interface assembly including at least one electrical conductor strain relief having a curvilinear flexible member formed from at least one spring material, wherein the curvilinear flexible member configured to route one or more second heater power conductors from the at least one second heater and one or more second heater sensor conductors from the at least one second heater sensor to at least one electrical connector.

2. The valve assembly of claim 1 wherein the at least one second heater is positioned in at least one shaft heater passage formed in the at least one valve shaft.

3. The valve assembly claim 2, wherein the at least one first heater and the at least one second heater are controlled independently.

4. The valve assembly of claim 2, wherein the at least one first heater and the at least one second heater are not controlled independently.

5. The valve assembly of claim 1, wherein the at least one second heater is located in or on the valve closure member.

6. The valve assembly claim 5, wherein the at least one first heater and the at least one second heater are controlled independently.

7. The valve assembly of claim 5, wherein the at least one first heater and the at least one second heater are not controlled independently.

8. A valve system, comprising:
at least one driver assembly;
at least one valve assembly including at least one valve body, wherein the at least one valve assembly includes at least one thermal isolating drive coupler configured to transmit a rotational force from the at least one driver assembly to at least one valve closure member via at least one valve shaft, the at least one valve assembly further comprising at least one first heater and at least one first heater sensor configured to allow a user to control at least one temperature of the at least one valve body within at least one first heating zone, and at least one second heater and at least one second heater sensor configured to allow a user to control at least one temperature of the at least one valve closure member in at least one second heating zone; and
at least one interface assembly in electrical communication with the at least one first heater and the at least one second heater, the at least one interface assembly including at least one electrical conductor strain relief configured to route one or more second heater power conductors and one or more second heater sensor conductors from the at least one second heater to at least one electrical connector positioned on the at least one interface assembly,
wherein the at least one electrical conductor strain relief includes at least one curvilinear flexible member formed from at least one spring material, wherein the at least one curvilinear flexible member is attached to at least one of the one or more second heater power conductors and the one or more second heater sensor conductors.

9. The valve system of claim 8, wherein the operating temperature of the at least one valve closure member exceeds about 200°C.

10. The valve system of claim 8, wherein the operating temperature of the at least one valve closure member exceeds about 180°C.

11. The valve system of claim 8, wherein the at least one second heater is positioned in at least one shaft heater passage formed in the at least one valve shaft.

12. The valve system of claim 11, wherein the at least one first heater and the at least one second heater are controlled independently.

13. The valve system of claim 11, wherein the at least one first heater and the at least one second heater are not controlled independently.

14. The valve system of claim 8, wherein the at least one second heater is located in or on the valve closure member.

15. The valve system of claim 14, wherein the at least one first heater and the at least one second heater are controlled independently.

16. The valve system of claim 14, wherein the at least one first heater and the at least one second heater are not controlled independently.
